(19) **Europäisches Patentamt / European Patent Office / Office européen des brevets**

(11) **EP 4 560 935 A1**

(12) **EUROPEAN PATENT APPLICATION**
published in accordance with Art. 153(4) EPC

(43) Date of publication:
28.05.2025 Bulletin 2025/22

(21) Application number: 23886225.4

(22) Date of filing: 31.10.2023

(51) International Patent Classification (IPC):
H04B 7/185 (2006.01)        H04W 24/08 (2009.01)
H04W 64/00 (2009.01)        H04W 84/06 (2009.01)

(52) Cooperative Patent Classification (CPC):
H04B 7/024; H04B 7/185; H04W 24/08;
H04W 24/10; H04W 64/00; H04W 84/06

(86) International application number:
PCT/KR2023/017158

(87) International publication number:
WO 2024/096529 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.10.2022 KR 20220142971

(71) Applicants:
• **Hyundai Motor Company**
  **Seoul 06797 (KR)**
• **Kia Corporation**
  **Seoul 06797 (KR)**

• **INHA University Research and Business Foundation**
  **Incheon 22212 (KR)**

(72) Inventors:
• **SUH, Young Kil**
  **Hwaseong-si, Gyeonggi-do 18280 (KR)**
• **HONG, Ui Hyun**
  **Hwaseong-si, Gyeonggi-do 18280 (KR)**
• **KIM, Duk Kyung**
  **Seoul 06762 (KR)**

(74) Representative: **Isarpatent**
  **Patent- und Rechtsanwälte**
  **Barth Hassa Peckmann & Partner mbB**
  **Friedrichstraße 31**
  **80801 München (DE)**

(54) **METHOD AND DEVICE FOR TRANSMITTING DATA IN NON-TERRESTRIAL NETWORK**

(57) The present disclosure relates to a method of a base station in an NTN, and may comprise the steps of: allocating an RS corresponding to each of a first satellite and a second satellite; controlling that data and the RS corresponding to each satellite are transmitted to a UE through the first satellite and the second satellite; receiving an RS measurement report message from the UE; and determining, on the basis of the received RS measurement report message, a transmission mode from among a single transmission mode in which the data is transmitted through one of the first satellite and the second satellite, and a diversity transmission mode in which the data is transmitted through both the first satellite and the second satellite.

EP 4 560 935 A1

【FIG. 12】

1121 base station

1112 second satellite

1111 first satellite

1101 UE

S1200 diversity transmission request

S1202 allocate reference signals to be transmitted via satellites

S1204a transmit data including first reference signal

S1204b transmit data including first reference signal

S1206a transmit data including second reference signal

S1206b transmit data including second reference signal

S1208 measure reference signals

S1210 reference signal measurement report

S1220 determine a transmission mode

S1230 transmit data based on a diversity mode or single transmission mode

**Description**

[Technical Field]

The present disclosure relates to a data transmission technique in a non-terrestrial network, and more particularly, to a diversity transmission technique.

[Background Art]

A communication network (e.g. 5G communication network, 6G communication network, etc.) to provide enhanced communication services compared to the existing communication network (e.g. long term evolution (LTE), LTE-Advanced (LTA-A), etc.) is being developed. The 5G communication network (e.g. new radio (NR) communication network) can support not only a frequency band of 6 GHz or below, but also a frequency band of 6 GHz or above. That is, the 5G communication network can support a frequency range (FR1) band and/or FR2 band. The 5G communication network can support various communication services and scenarios compared to the LTE communication network. For example, usage scenarios of the 5G communication network may include enhanced Mobile BroadBand (eMBB), Ultra Reliable Low Latency Communication (URLLC), Massive Machine Type Communication (mMTC), and the like.

The 6G communication network can support a variety of communication services and scenarios compared to the 5G communication network. The 6G communication networks can meet the requirements of hyper-performance, hyper-bandwidth, hyper-space, hyper-precision, hyper-intelligence, and/or hyper-reliability. The 6G communication networks can support various and wide frequency bands and can be applied to various usage scenarios (e.g. terrestrial communication, non-terrestrial communication, sidelink communication, and the like).

The communication network (e.g. 5G communication network, 6G communication network, etc.) may provide communication services to terminals located on the ground. Recently, the demand for communication services for not only terrestrial but also non-terrestrial airplanes, drones, and satellites has been increasing, and for this purpose, technologies for a non-terrestrial network (NTN) have been discussed. The non-terrestrial network may be implemented based on 5G communication technology, 6G communication technology, and/or the like. For example, in the non-terrestrial network, communication between a satellite and a terrestrial communication node or a non-terrestrial communication node (e.g. airplane, drone, or the like) may be performed based on 5G communication technology, 6G communication technology, and/or the like. In the NTN, the satellite may perform functions of a base station in a communication network (e.g. 5G communication network, 6G communication network, and/or the like).

Meanwhile, in NTN, a long distance between a satellite and a terminal, as well as a significant Doppler shift caused by high-speed movement, may degrade link quality. To overcome this, research on coverage enhancement (CovEnh) has been actively discussed in 3GPP standard meetings since Rel-17. The performance improvement achievable through transmission and reception using a single satellite is limited, and these limitations become more pronounced, particularly when an elevation angle is low or in urban/suburban areas with many tall buildings. The low earth orbit (LEO) satellite systems such as Starlink and OneWeb aim to provide, or are planning to provide, global services using hundreds to thousands of satellites. In such cases, a specific service area may be served by multiple satellites, increasing the feasibility of implementing diversity techniques through transmission and reception utilizing multiple satellites. However, due to differences in transmission delays and Doppler shift values between links via different satellites, it is considered challenging to directly apply the multi-TRP transmission techniques developed for terrestrial networks (TN) to satellite diversity in NTN environments.

When supporting terminals with antennas that have low antenna gain, such as handheld terminals, or in cases with a low link budget, diversity transmission techniques utilizing multiple satellites are required to enhance performance. In NTN environments, each link via a different satellite may experience a significant difference in transmission delay and Doppler shift value. Therefore, it is difficult to directly apply the multi-TRP transmission techniques developed for TN. Accordingly, for satellite diversity transmission in NTN environments, it is required to develop new satellite diversity transmission techniques that consider the NTN environments.

[Disclosure]

[Technical Problem]

The present disclosure is directed to providing a method and an apparatus for diversity transmission in a non-terrestrial network.

[Technical Solution]

A method of a base station, according to the present disclosure for achieving the above-described objective, may comprise: allocating a reference signal (RS) corresponding to each of a first satellite and a second satellite; controlling the first satellite and the second satellite to transmit an RS and data corresponding to each satellite to a user equipment (UE); receiving an RS measurement report message from the UE; determining a transmission mode among a single transmission mode for transmitting data via one of the first satellite and the second satellite or a diversity transmission mode for transmitting data via both the first satellite and the second satellite, based on the received RS measurement report message; and transmitting data to the UE based on the determined transmission mode, wherein the RS measurement report message includes a first time delay and a first Doppler shift based on a first RS received through a first link via the first satellite and a second time delay and a second Doppler shift based on a second RS received through a second link via the second satellite.

The diversity transmission mode may be determined when a difference between the first time delay and the second time delay is less than a predetermined first threshold value, and a difference between the first Doppler shift and the second Doppler shift is less than a predetermined second threshold value.

The single transmission mode may be determined when a difference between the first time delay and the second time delay is greater than or equal to a predetermined first threshold value or when a difference between the first Doppler shift and the second Doppler shift is greater than or equal to a predetermined second threshold value.

The RS measurement report message may be received via a serving satellite among the first satellite and the second satellite.

The RS measurement report message may be composed of a first RS measurement report message received through the first link and a second RS measurement report message received through the second link, the first RS measurement report message may include the first time delay and the first Doppler shift, and the second RS measurement report message may include the second time delay and the second Doppler shift.

The allocating of the RS corresponding to each of the first satellite and the second satellite may be performed when a diversity transmission request is received from the UE.

The method may further comprise: receiving a diversity transmission request from the UE; compensating for the first time delay so that a difference between the first time delay and the second time delay becomes less than a predetermined first threshold value when the transmission mode determined based on the RS measurement report message is the single transmission mode; compensating for the first Doppler shift so that a difference between the first Doppler shift and the second Doppler shift becomes less than a predetermined second threshold value; and determining the diversity transmission mode by applying the compensated values.

The first link having the first time delay may be a longer time delay than the second link.

An base station, according to exemplary embodiments of the present disclosure, may comprise at least one processor, wherein the at least one processor causes the base station to perform: allocating a reference signal (RS) corresponding to each of a first satellite and a second satellite; controlling the first satellite and the second satellite to transmit an RS and data corresponding to each satellite to a user equipment (UE); receiving an RS measurement report message from the UE; determining a transmission mode among a single transmission mode for transmitting data via one of the first satellite and the second satellite or a diversity transmission mode for transmitting data via both the first satellite and the second satellite, based on the received RS measurement report message; and transmitting data to the UE based on the determined transmission mode, wherein the RS measurement report message includes a first time delay and a first Doppler shift based on a first RS received through a first link via the first satellite and a second time delay and a second Doppler shift based on a second RS received through a second link via the second satellite.

The diversity transmission mode may be determined when a difference between the first time delay and the second time delay is less than a predetermined first threshold value, and a difference between the first Doppler shift and the second Doppler shift is less than a predetermined second threshold value.

The single transmission mode may be determined when a difference between the first time delay and the second time delay is greater than or equal to a predetermined first threshold value or when a difference between the first Doppler shift and the second Doppler shift is greater than or equal to a predetermined second threshold value.

The RS measurement report message may be received via a serving satellite among the first satellite and the second satellite.

The RS measurement report message may be composed of a first RS measurement report message received through the first link and a second RS measurement report message received through the second link, the first RS measurement report message may include the first time delay and the first Doppler shift, and the second RS measurement report message may include the second time delay and the second Doppler shift.

The at least one processor may further cause the base station to perform: the allocating of the RS corresponding to each of the first satellite and the second satellite, when a diversity transmission request is received from the UE.

The at least one processor may further cause the base station to perform: receiving a diversity transmission request from the UE; compensating for the first time delay so that a difference between the first time delay and the second time delay becomes less than a predetermined first threshold value when the transmission mode determined based on the RS measurement report message is the single transmission mode; compensating for the first Doppler shift so that a difference between the first Doppler shift and the second Doppler shift becomes less than a predetermined second threshold value; and determining the diversity transmission mode by applying the compensated values.

The first link having the first time delay may have a longer time delay than the second link.

[Advantageous Effects]

According to the present disclosure, an NTN base station or an NTN UE can determine a transmission delay and a degree of Doppler shift for each link through a different satellite by measuring or estimating them using reference signals. Based on the identified differences in transmission delay and Doppler shift between the links, a diversity transmission mode or a single transmission mode can be determined. Furthermore, according to the present disclosure, when the single transmission mode needs to be performed, the system can operate in the diversity transmission mode by compensating for the differences in transmission delay and Doppler shift between the links in response to a request from the UE. Accordingly, the efficiency of data transmission in NTN can be increased.

[Description of Drawings]

FIG. 1A is a conceptual diagram illustrating a first exemplary embodiment of a non-terrestrial network.
FIG. 1B is a conceptual diagram illustrating a second exemplary embodiment of a non-terrestrial network.
FIG. 2A is a conceptual diagram illustrating a third exemplary embodiment of a non-terrestrial network.
FIG. 2B is a conceptual diagram illustrating a fourth exemplary embodiment of a non-terrestrial network.
FIG. 2C is a conceptual diagram illustrating a fifth exemplary embodiment of a non-terrestrial network.
FIG. 3 is a block diagram illustrating a first exemplary embodiment of a communication node constituting a non-terrestrial network.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6A is a conceptual diagram illustrating a first exemplary embodiment of a protocol stack of a user plane in a transparent payload-based non-terrestrial network.
FIG. 6B is a conceptual diagram illustrating a first exemplary embodiment of a protocol stack of a control plane in a transparent payload-based non-terrestrial network.
FIG. 7A is a conceptual diagram illustrating a first exemplary embodiment of a protocol stack of a user plane in a regenerative payload-based non-terrestrial network.
FIG. 7B is a conceptual diagram illustrating a first exemplary embodiment of a protocol stack of a control plane in a regenerative payload-based non-terrestrial network.
FIGS. 8A to 8C are conceptual diagrams illustrating three operation schemes of TRPs.
FIG. 9A is a conceptual diagram illustrating a comb-6 pattern with three TRPs as a DL-PRS pattern in 3GPP TN, and FIG. 9B is a conceptual diagram illustrating a comb-4 pattern as a UL-PRS pattern in 3GPP TN.
FIG. 10A is a diagram illustrating a constellation of Starlink, and FIG. 10B is a diagram illustrating Alaska gateway antennas deployed in the OneWeb system.
FIG. 11 is a conceptual diagram illustrating diversity signal transmission using two transparent satellites in the NTN environment.
FIG. 12 is a sequence chart illustrating a measurement-based switching operation between a satellite diversity transmission mode and a single transmission mode in NTN.
FIG. 13 is a flowchart illustrating operations of a base station when determining a transmission mode according to the first exemplary embodiment of the present disclosure.
FIG. 14 is a sequence chart illustrating a measurement-based switching operation between a satellite diversity transmission mode and a single transmission mode in NTN.
FIG. 15 is a flowchart illustrating a switching operation between a JT mode and a non-JT mode in NTN.
FIG. 16 is a sequence chart illustrating a method for performing a satellite diversity transmission mode based on pre-compensation in an NTN.
FIG. 17 is a flowchart illustrating operations of a base station in determining a transmission mode according to the fourth exemplary embodiment of the present disclosure.

[Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprise" and/or "include" when used herein, specify the presence of stated features, integers, steps, operations, elements, components or combinations thereof, but do not preclude the presence or addition of one or more other features, integers, steps, operations, elements, components, and/or combinations thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted. In addition to the exemplary embodiments explicitly described in the present disclosure, operations may be performed according to a combination of the exemplary embodiments, extensions of the exemplary embodiments, and/or modifications of the exemplary embodiments. Performance of some operations may be omitted, and the order of performance of operations may be changed.

Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a user equipment (UE) is described, a base station corresponding to the UE may perform an operation corresponding to the operation of the UE. Conversely, when an operation of a base station is described, a UE corresponding to the base station may perform an operation corresponding to the operation of the base station. In a non-terrestrial network (NTN) (e.g. payload-based NTN), operations of a base station may refer to operations of a satellite, and operations of a satellite may refer to operations of a base station.

The base station may refer to a NodeB, evolved NodeB (eNodeB), next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and/or the like. The UE may refer to a terminal, device, apparatus, node, communication node, end node, access terminal, mobile terminal, station, subscriber station, mobile station, portable subscriber station, on-broad unit (OBU), and/or the like.

In the present disclosure, signaling may be at least one of higher layer signaling, medium access control (MAC) signaling, or physical (PHY) signaling. Messages used for higher layer signaling may be referred to as 'higher layer messages' or 'higher layer signaling messages'. Messages used for MAC signaling may be referred to as 'MAC messages' or 'MAC signaling messages'. Messages used for PHY signaling may be referred to as 'PHY messages' or 'PHY signaling messages'. The higher layer signaling may refer to a transmission and reception operation of system information (e.g. master information block (MIB), system information block (SIB)) and/or RRC messages. The MAC signaling may refer to a transmission and reception operation of a MAC control element (CE). The PHY signaling may refer to a transmission and reception operation of control information (e.g. downlink control information (DCI), uplink control information (UCI), and sidelink control information (SCI)).

In the present disclosure, "an operation (e.g. transmission operation) is configured" may mean that "configuration information (e.g. information element(s) or parameter(s)) for the operation and/or information indicating to perform the operation is signaled". "Information element(s) (e.g. parameter(s)) are configured" may mean that "corresponding information element(s) are signaled". In the present disclosure, "signal and/or channel" may mean a signal, a channel, or "signal and channel," and "signal" may be used to mean "signal and/or channel".

A communication system may include at least one of a terrestrial network, non-terrestrial network, 4G communication network (e.g. long-term evolution (LTE) communication network), 5G communication network (e.g. new radio (NR) communication network), or 6G communication network. Each of the 4G communications network, 5G communications network, and 6G communications network may include a terrestrial network and/or a non-terrestrial network. The non-terrestrial network may operate based on at least one communication technology among the LTE communication technology, 5G communication technology, or 6G communication technology. The non-terrestrial network may provide communication services in various frequency bands.

The communication network to which exemplary embodiments are applied is not limited to the content described below, and the exemplary embodiments may be applied to various communication networks (e.g. 4G communication network, 5G communication network, and/or 6G communication network). Here, a communication network may be used in the same sense as a communication system.

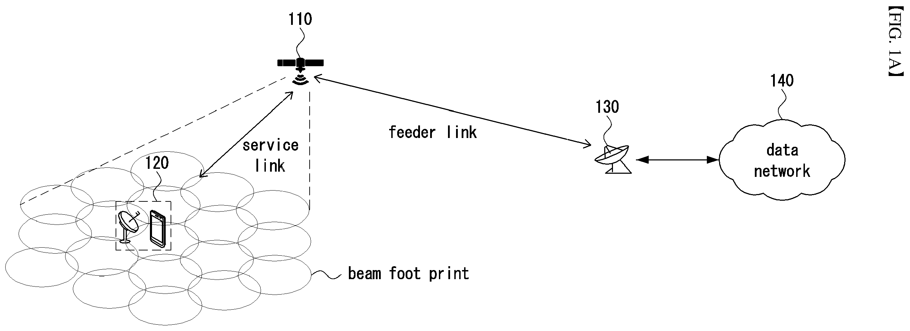

FIG. 1A is a conceptual diagram illustrating a first exemplary embodiment of a non-terrestrial network.

As shown in FIG. 1A, a non-terrestrial network (NTN) may include a satellite 110, a communication node 120, a gateway 130, a data network 140, and the like. A unit including the satellite 110 and the gateway 130 may correspond to a remote radio unit (RRU). The NTN shown in FIG. 1A may be an NTN based on a transparent payload. The satellite 110 may be a low earth orbit (LEO) satellite, a medium earth orbit (MEO) satellite, a geostationary earth orbit (GEO) satellite, a high elliptical orbit (HEO) satellite, or an unmanned aircraft system (UAS) platform. The UAS platform may include a high altitude platform station (HAPS). A non-GEO satellite may be an LEO satellite and/or MEO satellite.

The communication node 120 may include a communication node (e.g. a user equipment (UE) or a terminal) located on a terrestrial site and a communication node (e.g. an airplane, a drone) located on a non-terrestrial space. A service link may be established between the satellite 110 and the communication node 120, and the service link may be a radio link. The satellite 110 may provide communication services to the communication node 120 using one or more beams. The shape of a footprint of the beam of the satellite 110 may be elliptical or circular.

In the non-terrestrial network, three types of service links can be supported as follows.

- Earth-fixed: a service link may be provided by beam(s) that continuously cover the same geographic area at all times (e.g. geosynchronous orbit (GSO) satellite).
- quasi-earth-fixed: a service link may be provided by beam(s) covering one geographical area during a limited period and provided by beam(s) covering another geographical area during another period (e.g. non-GSO (NGSO) satellite forming steerable beams).
- earth-moving: a service link may be provided by beam(s) moving over the Earth's surface (e.g. NGSO satellite forming fixed beams or non-steerable beams).

The communication node 120 may perform communications (e.g. downlink communication and uplink communication) with the satellite 110 using 4G communication technology, 5G communication technology, and/or 6G communication technology. The communications between the satellite 110 and the communication node 120 may be performed using an NR-Uu interface and/or 6G-Uu interface. When dual connectivity (DC) is supported, the communication node 120 may be connected to other base stations (e.g. base stations supporting 4G, 5G, and/or 6G functionality) as well as the satellite 110, and perform DC operations based on the techniques defined in 4G, 5G, and/or 6G technical specifications.

The gateway 130 may be located on a terrestrial site, and a feeder link may be established between the satellite 110 and the gateway 130. The feeder link may be a radio link. The gateway 130 may be referred to as a 'non-terrestrial network (NTN) gateway'. The communications between the satellite 110 and the gateway 130 may be performed based on an NR-Uu interface, a 6G-Uu interface, or a satellite radio interface (SRI). The gateway 130 may be connected to the data network 140. There may be a 'core network' between the gateway 130 and the data network 140. In this case, the gateway 130 may be connected to the core network, and the core network may be connected to the data network 140. The core network may support the 4G communication technology, 5G communication technology, and/or 6G communication technology. For example, the core network may include an access and mobility management function (AMF), a user plane function (UPF), a session management function (SMF), and the like. The communications between the gateway 130 and the core network may be performed based on an NG-C/U interface or 6G-C/U interface.

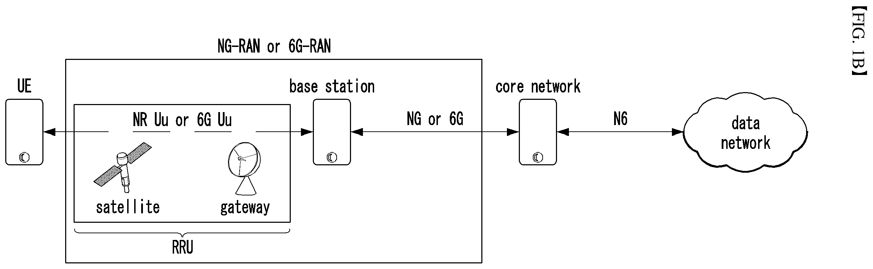

As shown in an exemplary embodiment of FIG. 1B, there may be a 'core network' between the gateway 130 and the data network 140 in a transparent payload-based NTN.

FIG. 1B is a conceptual diagram illustrating a second exemplary embodiment of a non-terrestrial network.

As shown in FIG. 1B, the gateway may be connected with the base station, the base station may be connected with the core network, and the core network may be connected with the data network. Each of the base station and core network may support the 4G communication technology, 5G communication technology, and/or 6G communication technology. The communications between the gateway and the base station may be performed based on an NR-Uu interface or 6G-Uu interface, and the communications between the base station and the core network (e.g. AMF, UPF, SMF, and the like) may be performed based on an NG-C/U interface or 6G-C/U interface.

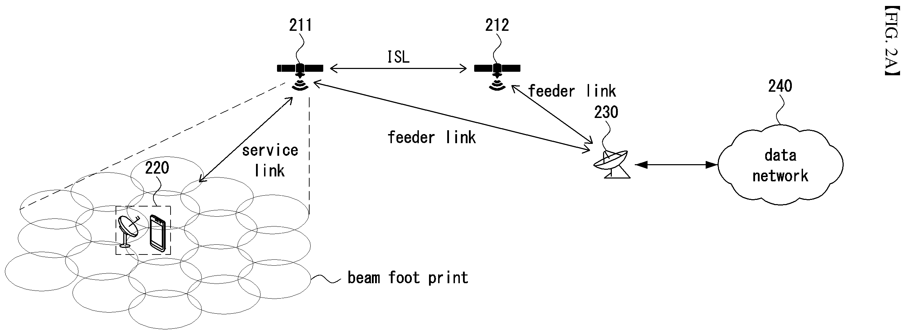

FIG. 2A is a conceptual diagram illustrating a third exemplary embodiment of a non-terrestrial network.

As shown in FIG. 2A, a non-terrestrial network may include a first satellite 211, a second satellite 212, a communication node 220, a gateway 230, a data network 240, and the like. The NTN shown in FIG. 2A may be a regenerative payload based NTN. For example, each of the satellites 211 and 212 may perform a regenerative operation (e.g. demodulation, decoding, re-encoding, re-modulation, and/or filtering operation) on a payload received from other entities (e.g. the communication node 220 or the gateway 230), and transmit the regenerated payload.

Each of the satellites 211 and 212 may be a LEO satellite, a MEO satellite, a GEO satellite, a HEO satellite, or a UAS platform. The UAS platform may include a HAPS. The satellite 211 may be connected to the satellite 212, and an inter-satellite link (ISL) may be established between the satellite 211 and the satellite 212. The ISL may operate in an RF frequency band or an optical band. The ISL may be established optionally. The communication node 220 may include a terrestrial communication node (e.g. UE or terminal) and a non-terrestrial communication node (e.g. airplane or drone). A service link (e.g. radio link) may be established between the satellite 211 and communication node 220. The satellite 211 may provide communication services to the communication node 220 using one or more beams.

The communication node 220 may perform communications (e.g. downlink communication or uplink communication) with the satellite 211 using the 4G communication technology, 5G communication technology, and/or 6G communication technology. The communications between the satellite 211 and the communication node 220 may be performed using an NR-Uu interface or 6G-Uu interface. When DC is supported, the communication node 220 may be connected to other base stations (e.g. base stations supporting 4G, 5G, and/or 6G functionality) as well as the satellite 211, and may perform DC operations based on the techniques defined in 4G, 5G, and/or 6G technical specifications.

The gateway 230 may be located on a terrestrial site, a feeder link may be established between the satellite 211 and the gateway 230, and a feeder link may be established between the satellite 212 and the gateway 230. The feeder link may be a radio link. When the ISL is not established between the satellite 211 and the satellite 212, the feeder link between the satellite 211 and the gateway 230 may be established mandatorily. The communications between each of the satellites 211 and 212 and the gateway 230 may be performed based on an NR-Uu interface, a 6G-Uu interface, or an SRI. The gateway 230 may be connected to the data network 240.

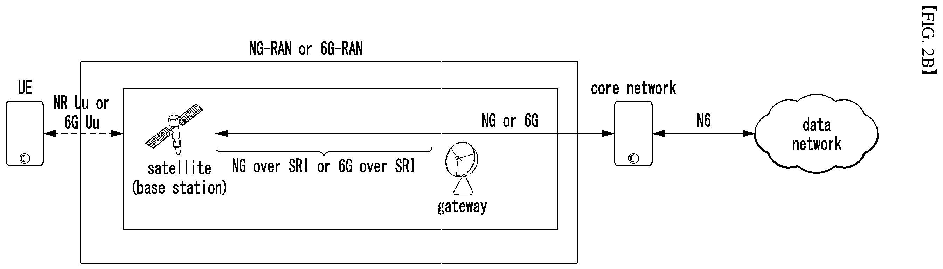

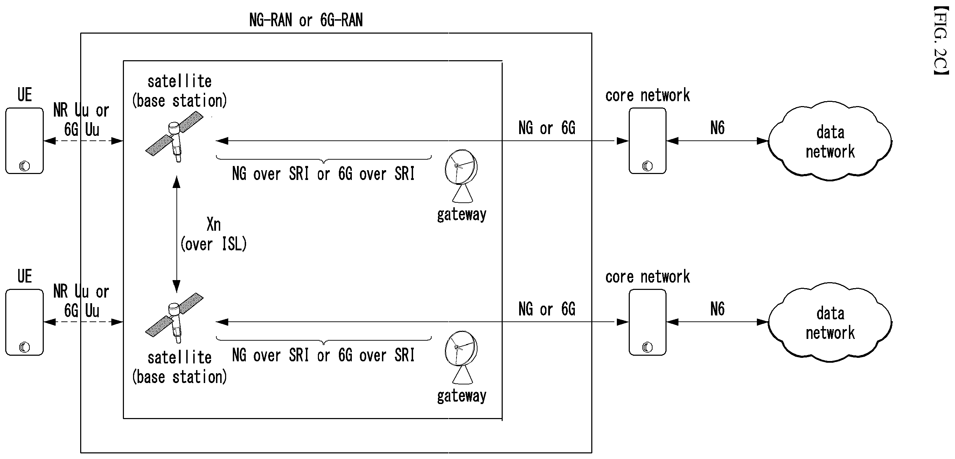

As shown in exemplary embodiments of FIG. 2B and FIG. 2C, there may be a 'core network' between the gateway 230 and the data network 240.

FIG. 2B is a conceptual diagram illustrating a fourth exemplary embodiment of a non-terrestrial network, and FIG. 2C is a conceptual diagram illustrating a fifth exemplary embodiment of a non-terrestrial network.

As shown in FIG. 2B and FIG. 2C, the gateway may be connected with the core network, and the core network may be connected with the data network. The core network may support the 4G communication technology, 5G communication technology, and/or 6G communication technology. For example. The core network may include AMF, UPF, SMF, and the like. Communication between the gateway and the core network may be performed based on an NG-C/U interface or 6G-C/U interface. Functions of a base station may be performed by the satellite. That is, the base station may be located on the satellite. A payload may be processed by the base station located on the satellite. Base stations located on different satellites may be connected to the same core network. One satellite may have one or more base stations. In the non-terrestrial network of FIG. 2B, an ISL between satellites may not be established, and in the non-terrestrial network of FIG. 2C, an ISL between satellites may be established.

Meanwhile, the entities (e.g. satellite, base station, UE, communication node, gateway, and the like) constituting the non-terrestrial network shown in FIGS. 1A, 1B, 2A, 2B, and/or 2C may be configured as follows. In the present disclosure, the entity may be referred to as a communication node.

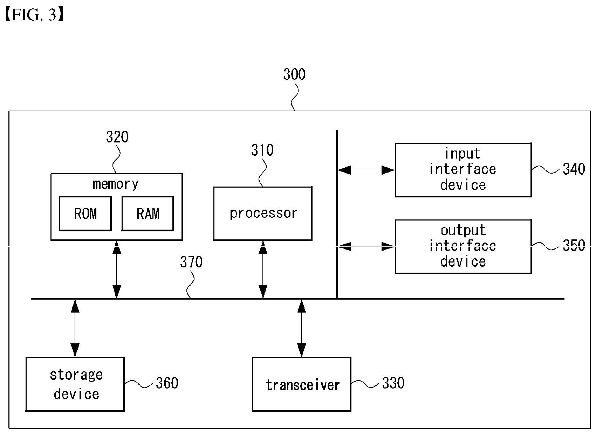

FIG. 3 is a block diagram illustrating a first exemplary embodiment of a communication node constituting a non-terrestrial network.

As shown in FIG. 3, a communication node 300 may include at least one processor 310, a memory 320, and a transceiver 330 connected to a network to perform communication. In addition, the communication node 300 may further include an input interface device 340, an output interface device 350, a storage device 360, and the like. The components included in the communication node 300 may be connected by a bus 370 to communicate with each other.

However, each component included in the communication node 300 may be connected to the processor 310 through a separate interface or a separate bus instead of the common bus 370. For example, the processor 310 may be connected to at least one of the memory 320, the transceiver 330, the input interface device 340, the output interface device 350, and the storage device 360 through a dedicated interface.

The processor 310 may execute at least one instruction stored in at least one of the memory 320 and the storage device 360. The processor 310 may refer to a central processing unit (CPU), a graphics processing unit (GPU), or a dedicated processor on which the methods according to the exemplary embodiments of the present disclosure are performed. Each of the memory 320 and the storage device 360 may be configured as at least one of a volatile storage medium and a nonvolatile storage medium. For example, the memory 320 may be configured with at least one of a read only memory (ROM) and a random access memory (RAM).

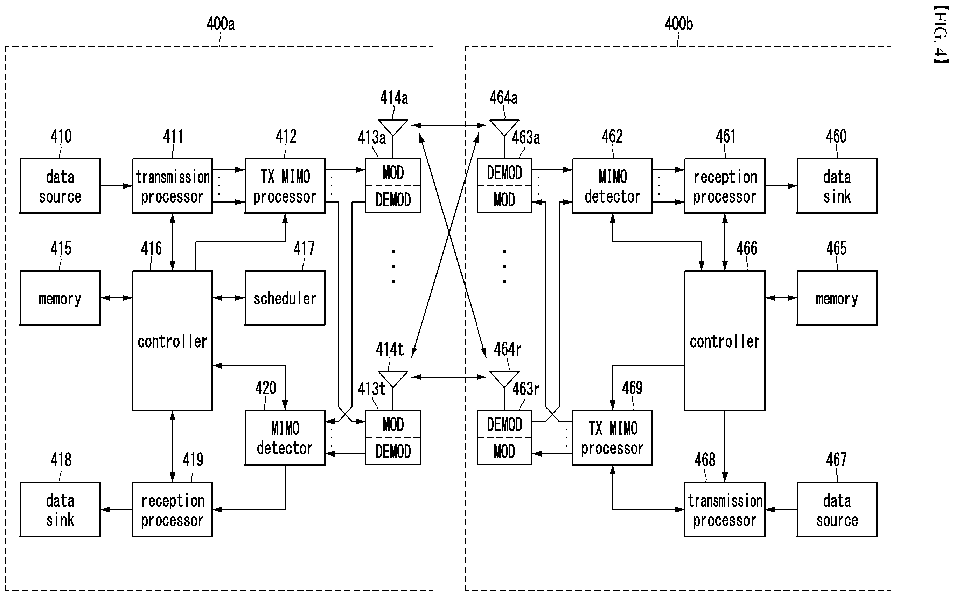

Meanwhile, communication nodes that perform communications in the communication network (e.g. non-terrestrial network) may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

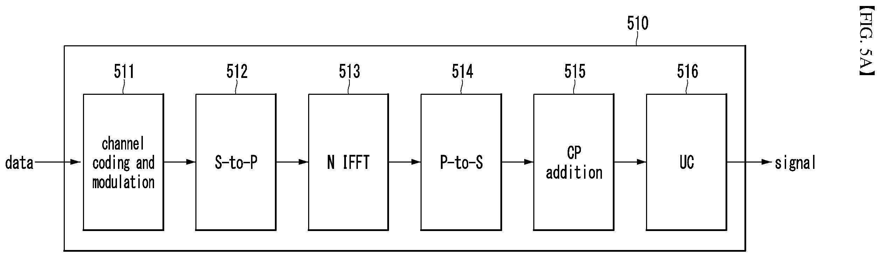

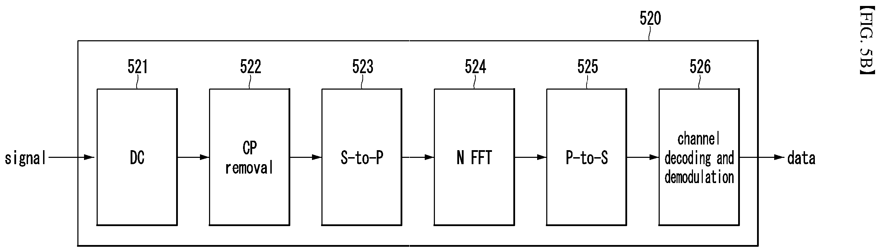

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, NTN reference scenarios may be defined as shown in Table 1 below.

[Table 1]

|  | NTN shown in FIG. 1 | NTN shown in FIG. 2 |
|---|---|---|
| GEO | Scenario A | Scenario B |
| LEO (steerable beams) | Scenario C1 | Scenario D1 |
| LEO (beams moving with satellite) | Scenario C2 | Scenario D2 |

When the satellite 110 in the NTN shown in FIG. 1A and/or FIG. 1B is a GEO satellite (e.g. a GEO satellite that supports a transparent function), this may be referred to as 'scenario A'. When the satellites 211 and 212 in the NTN shown in FIG. 2A, FIG. 2B, and/or FIG. 2C are GEO satellites (e.g. GEOs that support a regenerative function), this may be referred to as 'scenario B'.

When the satellite 110 in the NTN shown in FIG. 1A and/or FIG. 1B is an LEO satellite with steerable beams, this may be referred to as 'scenario C1'. When the satellite 110 in the NTN shown in FIG. 1A and/or FIG. 1B is an LEO satellite having beams moving with the satellite, this may be referred to as 'scenario C2'. When the satellites 211 and 212 in the NTN shown in FIG. 2A, FIG. 2B, and/or FIG. 2C are LEO satellites with steerable beams, this may be referred to as 'scenario D1'. When the satellites 211 and 212 in the NTN shown in FIG. 2A, FIG. 2B, and/or FIG. 2C are LEO satellites having beams moving with the satellites, this may be referred to as 'scenario D2'.

Parameters for the NTN reference scenarios defined in Table 1 may be defined as shown in Table 2 below.

[Table 2]

| | Scenarios A and B | Scenarios C and D | |
|---|---|---|---|
| Altitude | 35,786 km | 600 km | |
| | | 1,200 km | |
| Spectrum (service link) | < 6 GHz (e.g. 2 GHz) > 6 GHz (e.g. DL 20 GHz, UL 30 GHz) | | |
| Maximum channel bandwidth capability (service link) | 30 MHz for band <6 GHz 1 GHz for band >6 GHz | | |
| Maximum distance between satellite and communication node (e.g. UE) at the minimum elevation angle | 40,581 km | 1,932 km (altitude of 600 km) 3,131 km (altitude of 1,200 km) | |
| Maximum round trip delay (RTD) (only propagation delay) | Scenario A: 541.46 ms (service and feeder links) Scenario B: 270.73 ms (only service link) | Scenario C: (transparent payload: service and feeder links) -5.77 ms (altitude of 600km) -41.77 ms (altitude of 1,200 km) Scenario D: (regenerative payload: only service link) -12.89 ms (altitude of 600 km) -20.89 ms (altitude of 1,200 km) | |
| Maximum differential delay within a cell | 10.3 ms | 3.12 ms (altitude of 600 km) 3.18 ms (altitude of 1,200 km) | |
| Service link | NR defined in 3GPP | | |
| Feeder link | Radio interfaces defined in 3GPP or non-3GPP | | |

In addition, in the scenarios defined in Table 1, delay constraints may be defined as shown in Table 3 below.

[Table 3]

| | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

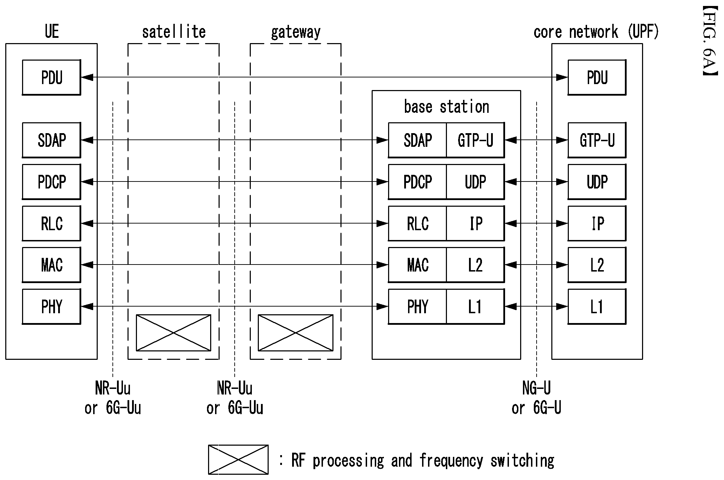

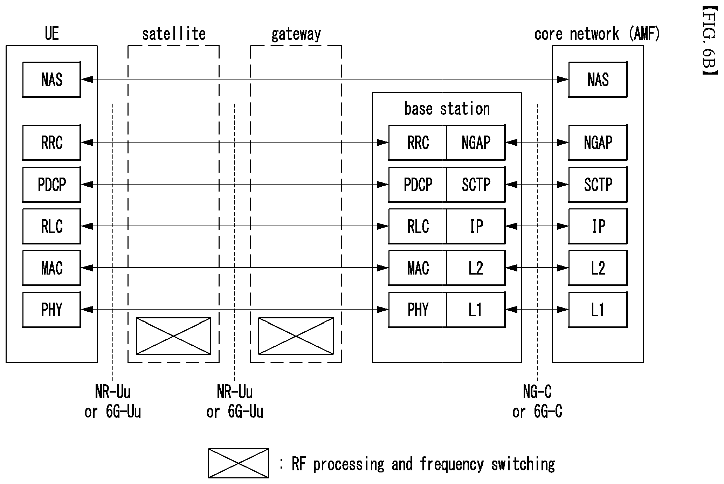

FIG. 6A is a conceptual diagram illustrating a first exemplary embodiment of a protocol stack of a user plane in a transparent payload-based non-terrestrial network, and FIG. 6B is a conceptual diagram illustrating a first exemplary embodiment of a protocol stack of a control plane in a transparent payload-based non-terrestrial network.

As shown in FIGS. 6A and 6B, user data may be transmitted and received between a UE and a core network (e.g. UPF), and control data (e.g. control information) may be transmitted and received between the UE and the core network (e.g. AMF). Each of the user data the and control data may be transmitted and received through a satellite and/or gateway. The protocol stack of the user plane shown in FIG. 6A may be applied identically or similarly to a 6G communication network. The protocol stack of the control plane shown in FIG. 6B may be applied identically or similarly to a 6G communication network.

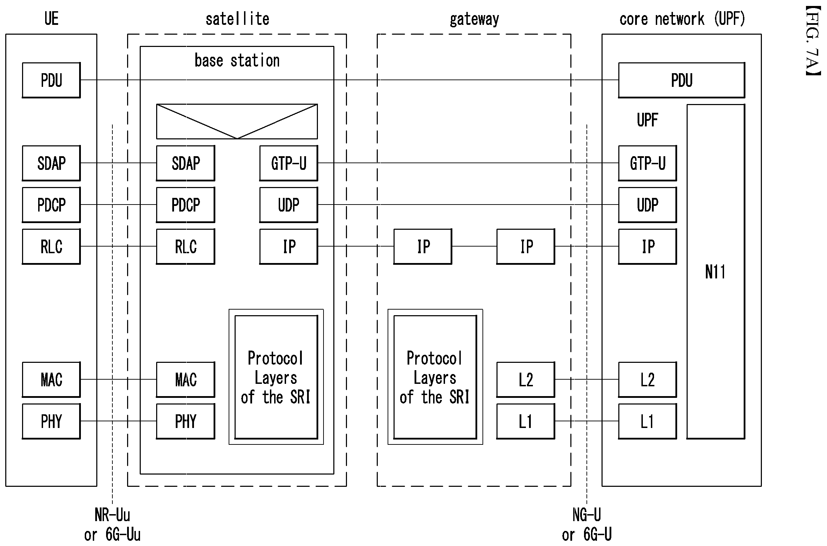

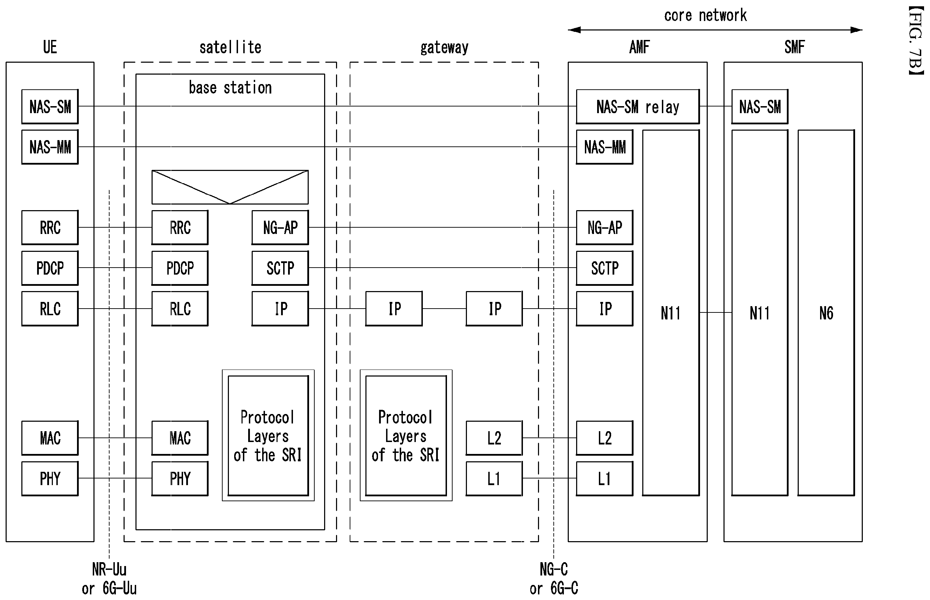

FIG. 7A is a conceptual diagram illustrating a first exemplary embodiment of a protocol stack of a user plane in a regenerative payload-based non-terrestrial network, and FIG. 7B is a conceptual diagram illustrating a first exemplary embodiment of a protocol stack of a control plane in a regenerative payload-based non-terrestrial network.

As shown in FIGS. 7A and 7B, each of user data and control data (e.g. control information) may be transmitted and received through an interface between a UE and a satellite (e.g. base station). The user data may refer to a user protocol data unit (PDU). A protocol stack of a satellite radio interface (SRI) may be used to transmit and receive the user data and/or control data between the satellite and a gateway. The user data may be transmitted and received through a general packet radio service (GPRS) tunneling protocol (GTP)-U tunnel between the satellite and a core network.

Meanwhile, in a non-terrestrial network, a base station may transmit system information (e.g. SIB19) including satellite assistance information for NTN access. A UE may receive the system information (e.g. SIB19) from the base station, identify the satellite assistance information included in the system information, and perform communication (e.g. non-terrestrial communication) based on the satellite assistance information. The SIB19 may include information element(s) defined in Table 4 below.

[Table 4]

| | |
|---|---|
| SIB19-r17 ::= SEQUENCE { | |
| 　　ntn-Config-r17 | NTN-Config-r17 |
| 　　t-Service-r17 | INTEGER(0..549755813887) |
| 　　referenceLocation-r17 | ReferenceLocation-r17 |
| 　　distanceThresh-r17 | INTEGER(0..65525) |
| 　　ntn-NeighCellConfigList-r17 | NTN-NeighCellConfigList-r17 |
| 　　lateNonCriticalExtension | OCTET STRING |
| 　　..., | |
| 　　[[ | |
| 　　ntn-NeighCellConfigListExt-v1720 | NTN-NeighCellConfigList-r17 |
| 　　]] | |
| } | |
| NTN-NeighCellConfigList-r17 ::= OF NTN-NeighCellConfig-r17 | SEQUENCE (SIZE(1..maxCellNTN-r17)) |

| | |
|---|---|
| 　NTN-NeighCellConfig-r17 ::= | SEQUENCE { |
| 　　ntn-Config-r17 | NTN-Config-r17 |
| 　　carrierFreq-r17 | ARFCN-ValueNR |
| 　　physCellId-r17 | PhysCellId |
| 　} | |

*NTN-Config* defined in Table 4 may include information element(s) defined in Table 5 below.

[Table 5]

```
NTN-Config-r17 ::=                    SEQUENCE {
    epochTime-r17                         EpochTime-r17
    ntn-UlSyncValidityDuration-r17 ENUMERATED{ s5, s10, s15, s20, s25, s30, s35,
s40, s45, s50, s55, s60, s120, s180, s240, s900}
    cellSpecificKoffset-r17               INTEGER(1..1023)
    kmac-r17                              INTEGER(1..512)
    ta-Info-r17                           TA-Info-r17
    ntn-PolarizationDL-r17                ENUMERATED {rhcp,lhcp,linear}
    ntn-PolarizationUL-r17                ENUMERATED {rhcp,lhcp,linear}
    ephemerisInfo-r17                     EphemerisInfo-r17
    ta-Report-r17                         ENUMERATED {enabled}

    ...
}
EpochTime-r17 ::=                     SEQUENCE {
    sfn-r17                               INTEGER(0..1023),
    subFrameNR-r17                        INTEGER(0..9)
}
TA-Info-r17 ::=                       SEQUENCE   {
    ta-Common-r17                         INTEGER(0..66485757),
    ta-CommonDrift-r17                    INTEGER(-257303..257303)
    ta-CommonDriftVariant-r17          INTEGER(0..28949)
}
```

*EphemerisInfo* defined in Table 5 may include information element(s) defined in Table 6 below.

[Table 6]

```
EphemerisInfo-r17 ::=              CHOICE {
        positionVelocity-r17          PositionVelocity-r17,
        orbital-r17                   Orbital-r17
}
PositionVelocity-r17 ::=           SEQUENCE {
        positionX-r17                 PositionStateVector-r17,
        positionY-r17                 PositionStateVector-r17,
        positionZ-r17                 PositionStateVector-r17,
        velocityVX-r17                VelocityStateVector-r17,
        velocityVY-r17                VelocityStateVector-r17,
        velocityVZ-r17                VelocityStateVector-r17
}
Orbital-r17 ::=                    SEQUENCE {
        semiMajorAxis-r17             INTEGER (0..8589934591),
        eccentricity-r17             INTEGER (0..1048575),
        periapsis-r17                INTEGER (0..268435455),
        longitude-r17                INTEGER (0..268435455),
        inclination-r17              INTEGER (-67108864..67108863),
        meanAnomaly-r17               INTEGER (0..268435455)
}
PositionStateVector-r17 ::= INTEGER (-33554432..33554431)
VelocityStateVector-r17 ::= INTEGER (-131072..131071)
```

Meanwhile, at the 3GPP RAN1 109-e meeting in May 2022, diversity-based coverage enhancement has been proposed. The proposal mentioned the following points.

● Frequency hopping is already supported in legacy NR releases and may continue to be used to provide frequency domain diversity in NR NTN. In previous discussions, diversity utilizing different satellites or different carriers has been mentioned in relation to the specific characteristics of NTN. However, the scenario is somewhat complex, and considering the limited TU, studying this type of diversity in Release 18 is not preferred.

● Polarization-based diversity may also be considered. Polarization may be supported for both an initial access procedure and data transmission in the RRC connected state. In the initial access procedure, SSBs with different polarization modes may be used. In the RRC connected state, different polarization modes may be used at least in different time-domain resources to achieve diversity gain.

Hereinafter, signal transmission methods in multi-transmission and reception point (multi-TRP) operations in a terrestrial network (TN) are described.

In TN, multi-TRP enables a base station to communicate with a terminal using one or more TRPs. In this case, the TRP may correspond to a cell, a remote radio head, or a relay node. In 3GPP, the following three operation schemes are being considered.

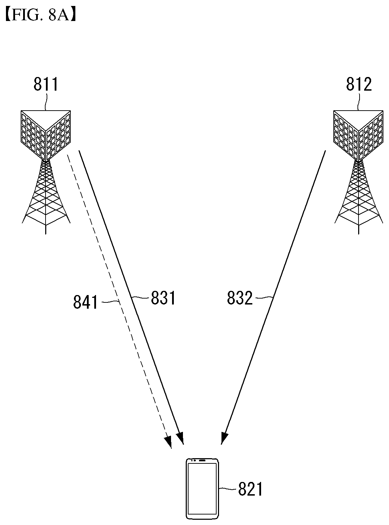

FIGS. 8A to 8C are conceptual diagrams illustrating three operation schemes of TRPs.

As shown in FIG. 8A, a first TRP 811, a second TRP 812, and a user equipment (UE) 821 are illustrated. The first TRP 811 and second TRP 812 may each transmit physical downlink shared channels (PDSCHs) 831 and 832 to the UE 821. At this time, a physical downlink control channel (PDCCH) 841, which carries control information for the PDSCHs, may be transmitted from only one specific TRP. The example in FIG. 8A illustrates a case where the first TRP 811 transmits the PDCCH to the UE 821. As is well known, the PDCCH may carry downlink control information (DCI).

In the case of FIG. 8A, if a radio link problem occurs with the first TRP 811 and reception of the PDCCH fails, communication via the second TRP 812 may also be affected.

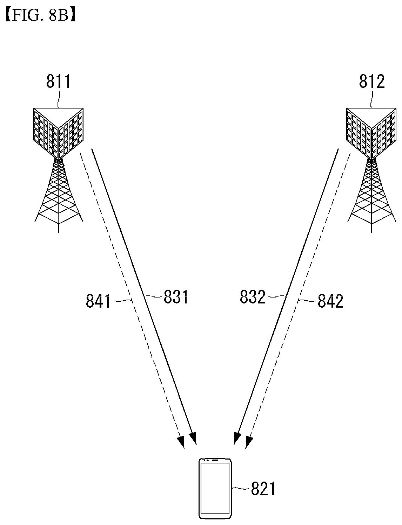

FIG. 8B illustrates the first TRP 811, second TRP 812, and UE 821, similarly to FIG. 8A. The first TRP 811 may transmit DCI to the UE 821 through the PDCCH 841 and transmit data based on the DCI to the UE 821 through the PDSCH 831. The second TRP 812 may also transmit DCI to the UE 821 through a PDCCH 842 and transmit data based on the DCI to the UE 821 through the PDSCH 832.

FIG. 8B represents a case where the TRPs 811 and 812 transmits the PDSCHs 831 and 832 and the PDCCHs 841 and 842 to the UE 821, respectively. Accordingly, in the case of FIG. 8B, even if a radio link problem occurs with one of the TRPs, communication via another TRP may be maintained.

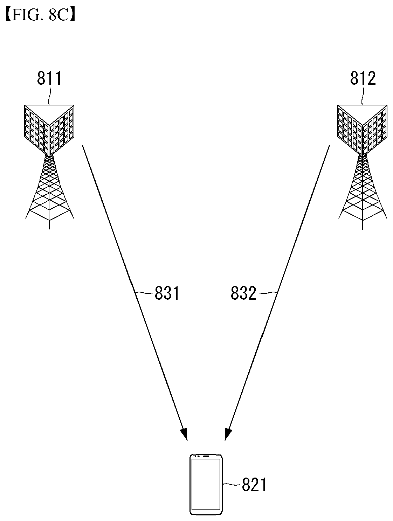

FIG. 8C illustrates the first TRP 811, second TRP 812, and UE 821, similarly to FIG. 8A. In the case of FIG. 8C, the first TRP 811 and second TRP 812 may jointly process downlink (DL) and uplink (UL) signals. The example in FIG. 8C may correspond to a scenario similar to coordinated multi-point (CoMP) as defined in 3GPP.

FIG. 8C illustrates a case where the first TRP 811 and second TRP 812 perform cooperative transmission to the UE 821 using the PDSCHs 831 and 832.

As illustrated in FIGS. 8A to 8C, in a TN using such a transmission scheme, data transmission and reception may be performed through multiple links. Although the distances between the TRPs located at different locations and the UE differ, considering that the propagation speed is the speed of light and that the absolute distances between the TRPs and the UE in a typical TN cell deployment are within several kilometers, a difference in transmission delay between the two links may be significantly smaller than an OFDM symbol duration. Therefore, signals from multiple TRPs may be received at the UE almost simultaneously.

In the case of FIGS. 8A and 8B, the UE 821 may receive signals from both satellites using two reception modules and perform diversity signal processing. In the case of FIG. 8C, the UE 821 may process signals using a single reception module in a manner similar to CoMP.

Hereinafter, positioning reference signals (PRSs) in TN are described.

In TN, PRS is defined for positioning purposes. In the RRC idle/inactive state, a UE may request a positioning system information block through an on-demand system information request using a random access message 1 or message 3. Additionally, in the RRC connected mode, a UE may request a positioning system information block using an on-demand connected mode.

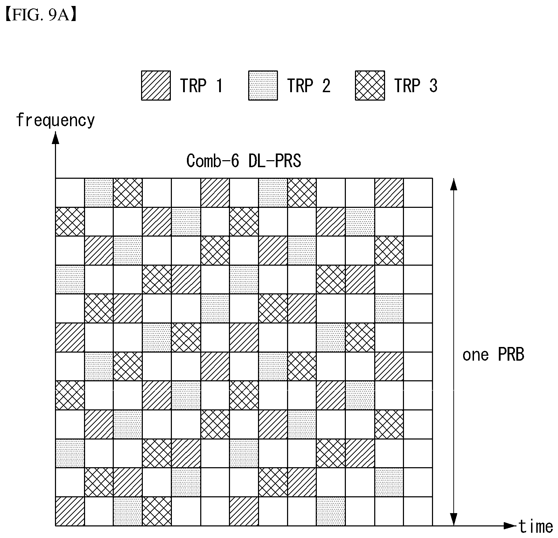

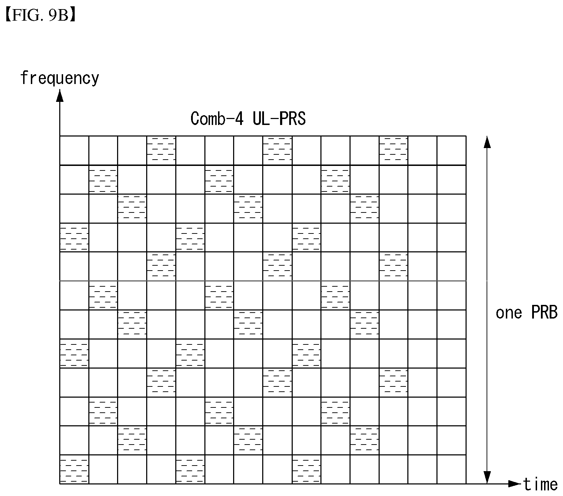

FIG. 9A is a conceptual diagram illustrating a comb-6 pattern with three TRPs as a DL-PRS pattern in 3GPP TN, and FIG. 9B is a conceptual diagram illustrating a comb-4 pattern as a UL-PRS pattern in 3GPP TN.

FIG. 9A represents an example of DL-PRS in downlink, and FIG. 9B represents an example of UL-SRS in uplink. Information obtainable through PRS measurement be as follows.

- Received signal time difference (RSTD) of a DL PRS at UE for each beam
- UE Rx-Tx time difference
- Multi-cell round trip time (multi-RTT)
- Downlink angle of departure (DL-AoD)
- Uplink angle of arrival (UL-AoA

Hereinafter, a low earth orbit (LEO) satellite system with a mega-constellation is described.

Representative LEO satellite systems include Starlink and OneWeb. These two systems utilize or plan to utilize hundreds to thousands of satellites to provide global service coverage. The OneWeb system currently consists of 720 satellites and will ultimately comprise 900 satellites at an altitude of 1,200 km. It includes 18 polar orbits, with 40 satellites per orbit. OneWeb plans to establish 50 to 70 gateway sites worldwide, which will include approximately 500 or more gateway antennas. Accordingly, a single gateway site may have up to ten 2.4-meter antennas.

Starlink, operated by SpaceX, deployed 362 satellites into orbit as of March 2020 and plans to deploy a total of 12,000 satellites. Starlink has three orbital altitudes, with the corresponding number of satellites at each altitude as follows.

(1) 1,600 satellites at an altitude of 550 km
(2) 2,800 satellites at an altitude of 1,150 km in the Ku and Ka bands
(3) 7,500 satellites at an altitude of 340 km in the V band

To operate such a large number of satellites and provide broadband data transmission exceeding 600 Mbps, hundreds of ground stations and approximately 3,500 gateway antennas are required.

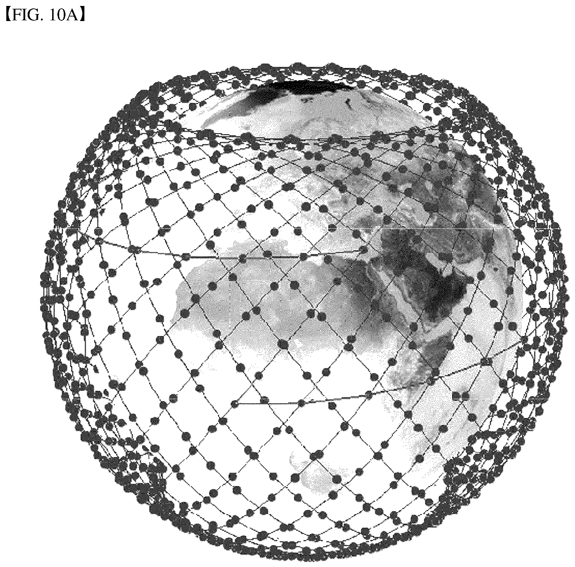

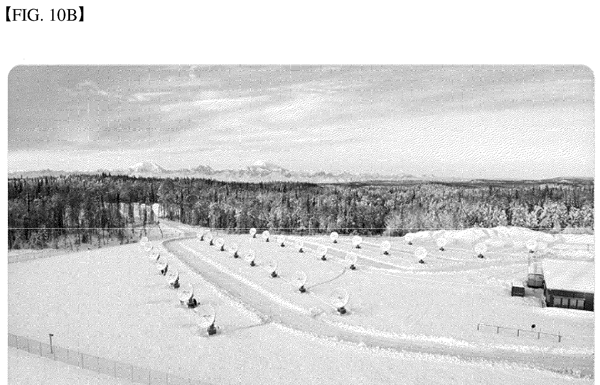

FIG. 10A is a diagram illustrating a constellation of Starlink, and FIG. 10B is a diagram illustrating Alaska gateway antennas deployed in the OneWeb system.

In the case of Starlink, as illustrated in FIG. 10A, or in the OneWeb system, as described in relation to FIG. 10B, when a specific service area is served by multiple satellites, a diversity effect can be achieved. Additionally, a single gateway may be configured to establish connections with multiple satellites.

In NTN, due to a long distance between a satellite and a terminal (e.g. UE) and a significant Doppler shift caused by high-speed movement, link quality is degraded. Therefore, studies on coverage enhancement (CovEnh) to address this issue have been actively discussed in 3GPP since Release 17. Performance improvement is limited when transmission and reception are performed using only a single satellite. In particular, these limitations become more pronounced when an elevation angle is low or in urban/suburban areas with a high density of tall buildings. The LEO satellite systems such as Starlink and OneWeb utilize or plan to utilize hundreds to thousands of satellites to provide global service coverage. In this case, a specific service area may be served by multiple satellites. Therefore, feasibility of realizing diversity techniques through transmission and reception via multiple satellites is high. However, due to differences in transmission delay and Doppler shift between links via different satellites, applying the multi-TRP transmission techniques developed for TN directly to satellite diversity in NTN is considered challenging.

When supporting terminals that use antennas with low antenna gain, such as handheld terminals (e.g. UE), or when a link budget is low, a diversity transmission scheme utilizing multiple satellites is required as a performance enhancement measure. In particular, in NTN environments, transmission delays and Doppler shifts experienced by multiple links via different satellites may have significant differences.

Due to these large differences in transmission delay and Doppler shift, it is difficult to directly apply the multi-TRP transmission techniques developed for TN. Therefore, to enable satellite diversity transmission in the NTN environment, it is required to develop a new satellite diversity transmission scheme that considers the NTN environments. In particular, considering the complexity of the terminal, signals received from multiple links need to be time-controlled so that they are received within an appropriate time interval. Additionally, since the satellites involved in diversity have different Doppler shift values, Doppler shift pre-compensation needs to be performed for each link.

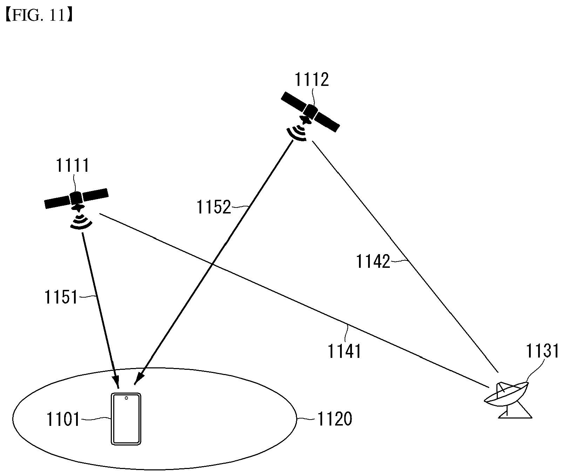

FIG. 11 is a conceptual diagram illustrating diversity signal transmission using two transparent satellites in the NTN environment.

As shown in FIG. 11, a UE 1101, a first satellite 1111, a second satellite 1112, and a gateway 1131 are illustrated. Here, the gateway 1131 may be directly connected to a base station (not shown in FIG. 11), configured as a single system with a base station, or connected to a base station via another network. In the present disclosure, operations of the gateway 1131, as described below, may be understood as operations of the base station. In other words, the gateway 1131 may be a device for connecting with the satellites 1111 and 1112, while the actual control on signal transmission and reception to and from the satellites 1111 and 1112 may be performed by the base station. However, to distinguish between a base station in TN and the base station connected to the gateway 1131, FIG. 11 describes the base station as the gateway 1131. In general, a base station constituting a TN in a mobile communication system will be referred to as a 'TN base station'.

The UE 1101 may receive signals from a TN base station or from at least one satellite in the NTN. Additionally, the UE 1101 may transmit signals to the TN base station or receive signals from at least one satellite in the NTN. Since the present disclosure describes the NTN environment, the case in which the UE 1101 communicates with the TN is omitted.

As described above, the first satellite 1111 may have a feeder link 1141 with the gateway 1131 located on the ground, and the second satellite 1112 may also have a feeder link 1142 with the gateway 1131 located on the ground.

The first satellite 1111 and the second satellite 1112 may be satellites capable of transmitting signals overlapping a specific area 1120 on the ground. In other words, the multi-NTN communication area 1120 illustrated in FIG. 11 may be an area where communications with the first satellite 1111 and the second satellite 1112 are possible simultaneously. In the following description, an area where signals can be received from two or more satellites is referred to as a 'multi-NTN communication area'.

The example in FIG. 11 illustrates a case where the UE 1101, located on the ground, is positioned in the multi-NTN communication area 1120. Therefore, the UE 1101 positioned in the multi-NTN communication area 1120 may transmit and receive signals with the first satellite 1111 through a service link 1151 between the first satellite 1111 and UE 1101. Additionally, the UE 1101 positioned in the multi-NTN communication area 1120 may transmit and receive signals with the second satellite 1112 through a service link 1152 between the second satellite 1112 and UE 1101. Here, the signals may include data, control information, reference signals, and the like.

In FIG. 11, the first satellite 1111 and the second satellite 1112 may form a satellite diversity transmission and reception environment considering transparent satellites. However, it should be noted that the satellites 1111 and 1112 in FIG. 11 are not limited to transparent satellites. In other words, even when the satellites 1111 and 1112 are non-transparent satellites, the same scheme may be applied. However, for convenience of description, the following description assumes that the satellites 1111 and 1112 are transparent satellites.

The transparent satellite may serve as a simple repeater and may perform operations such as frequency filtering, frequency conversion, and signal amplification. The gateway 1131 may simultaneously establish and use the feeder links with both the satellites 1111 and 1112, as illustrated in FIG. 11. Although only a single UE is illustrated in FIG. 11 for convenience of description, it is obvious to those skilled in the art that multiple UEs may be located in the multi-NTN communication area 1120. The UEs located in the multi-NTN communication area 1120 may perform diversity reception using signals transmitted from two or more satellites.

To describe diversity reception, a first link and second link are distinguished and described separately.

A link between the gateway 1131, first satellite 1111, and UE 1101 may be referred to as the first link, and a link between the gateway 1131, second satellite 1112, and UE 1101 may be referred to as the second link. The first link and the second link may be distinguishable at least at a reference signal level, and the gateway 1131 may control transmission by using a different antenna/Tx module for each satellite.

The first link and the second link may have different propagation path distances and Doppler shift values. The gateway 1131 may individually perform timing control and Doppler shift pre-compensation for each link.

In TN multi-TRP transmission, as described in FIGS. 8A-8C, the difference in transmission delay between the links is smaller than the OFDM symbol duration, and the difference in Doppler shift between the links is negligible enough not to be considered. Therefore, no separate processing for the differences in delay and Doppler shift between the links has been presented.

However, in NTN environments, additional operations that consider the difference in transmission delay and Doppler shift between the two links are required. In this case, when diversity transmission uses the same resources and polarization, cooperative transmission (e.g. joint transmission, JT) such as CoMP may be applied. When different resources or polarization are used, non-JT diversity reception that utilizes a different stream for each link may also be applied. In both cases, appropriate timing control and Doppler shift pre-compensation need to be performed to reduce the complexity of the UE 1101 and ensure the diversity gain.

Accordingly, the present disclosure provides a scheme for switching a transmission mode between satellite diversity and single transmission in NTN environments, as well as a scheme for link-specific timing control and Doppler shift pre-compensation for satellite diversity.

**First exemplary embodiment: Method for switching between diversity transmission mode and single transmission mode based on measurements**

The first exemplary embodiment of the present disclosure provides a method for switching between a satellite diversity transmission mode of downlink (DL) and a satellite single transmission mode of DL in NTN environments based on measurement information such as time delay (transmission delay) and Doppler shift. Hereinafter, the satellite diversity mode refers to a technique for obtaining diversity gain by transmitting signals via two or more satellites. Since the following description pertains to the diversity mode in NTN environments, the diversity mode may refer to a satellite diversity mode.

In this case, the first exemplary embodiment of the present disclosure pertains to a case in which determination on whether to perform the diversity transmission mode or the single transmission mode is made based on measurement and reporting at the UE. In the following description, a link may refer to a link between a satellite and a terminal and/or a link between the satellite and a gateway. Additionally, it should be noted that the gateway may be used independently, or the gateway may be directly connected to a base station or indirectly connected to a base station via another network.

According to the first exemplary embodiment of the present disclosure, the diversity transmission mode that performs joint transmission (JT) may be applied when differences in time delay and Doppler shift between the two links in the NTN environment is within a certain level. When the differences exceed the certain level, the single transmission mode may be applied. The first exemplary embodiment of the present disclosure may be used when the base station does not have a function for link-specific timing and Doppler shift pre-compensation.

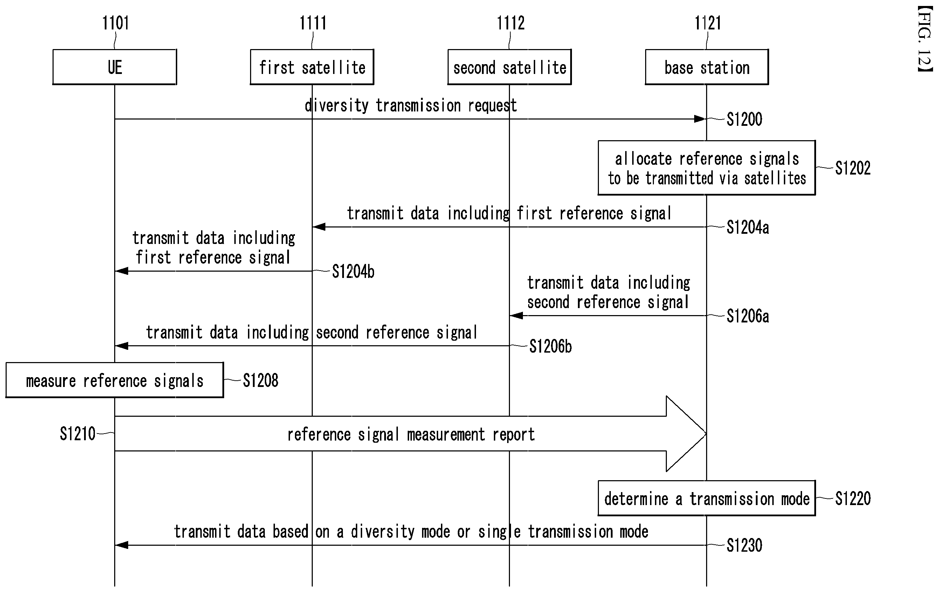

FIG. 12 is a sequence chart illustrating a measurement-based switching operation between a satellite diversity transmission mode and a single transmission mode in NTN.

The entities of FIG. 12, such as the UE 1101, first satellite 1111, and second satellite 1112, use the same reference numerals as in FIG. 11. However, the base station 1121 may be directly connected to the gateway 1131 illustrated in FIG. 11, may be configured as a single system, or may be connected to the gateway 1131 via another network. Accordingly, the base station 1121 described in FIG. 12 may refer to a base station connected to the gateway 1131 illustrated in FIG. 11.

FIG. 12 describes the satellite diversity transmission mode using two satellites, namely, through two links using the first satellite 1111 and second satellite 1112. However, it should be noted that when three or more satellites form a multi-NTN communication area, as described in FIG. 11, three or more satellites may also be utilized.

In step S1200, the UE 1101 may transmit a diversity transmission request message to the base station 1121. FIG. 12 illustrates a case in which the UE 1101 transmits the diversity request message to the base station 1121, but it is also possible that the base station 1121 transmits a diversity transmission request message to the UE 1101. Accordingly, the base station 1121 may receive the diversity transmission request message from the UE 1101.

Meanwhile, as previously described, the transmission of the diversity transmission request message may occur when the UE 1101 is located in a multi-NTN communication area. Additionally, the diversity transmission request message may be transmitted to the base station 1121 via the first satellite 1111 or via the second satellite 1112. In other words, the diversity transmission request message may be a message transmitted when the UE 1101 is in the single transmission mode. In this case, the satellite used by the UE 1101 to transmit the diversity transmission request message may be a serving satellite.

In another example, the diversity transmission request message may also be transmitted when the UE 1101 is currently in the diversity transmission mode but intends to maintain the diversity transmission mode. In such a case, the diversity transmission request message may be transmitted via the first satellite 1111 and/or second satellite 1112. In other words, the diversity transmission request message may be transmitted via a single satellite, or via both satellites.

Criteria for determining whether the UE 1101 is located in a multi-NTN communication area may be whether signals are received from two or more satellites and/or location information of the UE 1101 and location information of the satellites 1111 and 1112 derived from ephemeris information. When the UE 1101 is located in a multi-NTN communication area, the UE 1101 may determine that diversity transmission is possible. In another example, even when the UE 1101 is located in a multi-NTN communication area, the diversity transmission request may be selectively made based on a quality of the received signals and/or service requirements. For example, when the quality of the received signals is good, diversity transmission may not be required for the UE 1101. In another example, when relatively low-speed data services that are insensitive to delay are provided, transmitting the diversity transmission request message may not be required. Accordingly, the UE 1101 may determine whether transmission of the diversity transmission request message to the base station 1121 is required by utilizing various types of information. FIG. 12 illustrates a case in which transmitting the diversity transmission request message is required based on at least one of the criteria described above.

The diversity transmission request message according to the present disclosure may be dynamically transmitted in form of an event trigger. In other words, the diversity transmission request message may be transmitted at any time when an event is triggered. In another example, according to the present disclosure, the diversity transmission request message may indicate a request or release of diversity transmission in a semi-static manner at a predetermined periodicity. In this case, the request periodicity may be determined based on the location of the UE 1101, ephemeris information, and the movement speeds of the satellites.

In step S1202, the base station 1121 may allocate reference signals (RS) to be transmitted via the satellites 1111 and 1112 based on the received diversity transmission request message. Since FIG. 12 illustrates the first satellite 1111 and second satellite 1112 as an example, the RSs may be classified into a first RS transmitted via the first satellite 1111 and a second RS transmitted via the second satellite 1112. In this case, the first RS and the second RS may utilize PRS defined in TN. Additionally, the first RS and the second RS may be different RSs to allow identification of the respective satellites.

The first RS and the second RS may be transmitted periodically. In another example, the first RS and the second RS may be transmitted upon a request. If the first RS and the second RS are transmitted periodically, a transmission periodicity of each of the first RS and the second RS may use a predefined value or be changed through signaling.

In steps S1204a and S1206a, the base station 1121 may transmit data including the first RS and the second RS to the first satellite 1111 and the second satellite 1112, respectively. In this case, the base station 1121 may transmit data including the first RS through a first feeder link established with the first satellite 1111 via the gateway 1131, which is not illustrated in FIG. 12. Similarly, the base station 1121 may transmit data including the second RS through a second feeder link established with the second satellite 1112 via the gateway 1131, which is not illustrated in FIG. 12.

In step S1204b, the first satellite 1111 may transmit the data including the first RS, received from the base station 1121, to the UE 1101 through a service link. In step S1206b, the second satellite 1112 may transmit the data including the second RS, received from the base station 1121, to the UE 1101 through a service link. Accordingly, in steps S1204b and S1206b, the UE 1101 may receive the first RS and the second RS from the first satellite 1111 and the second satellite 1112, respectively.

FIG. 12 illustrates a case in which steps S1204a and S1206a are performed sequentially. However, when actual transmissions occur through the feeder links, steps S1204a and S1206a may be performed simultaneously. In another example, in steps S1204b and S1206b, the base station 1121 may change or adjust transmission timings of the RSs to be transmitted via the satellites 1111 and 1112 so that the UE 1101 receives them either simultaneously or sequentially.

In step S1208, the UE 1101 may measure the RSs received from the first satellite 1111 and second satellite 1112 and obtain measurement information. Here, the measurement information may include a time delay between transmission and reception for each link (or variation in the time delay) and a Doppler shift for each link (or variation in the Doppler shift).

In other words, the UE 1101 may measure a time delay between transmission and reception (or variation in the time delay) and a Doppler shift (or variation in the Doppler shift) by using the first RS received via the first satellite 1111. The measured information may be measurement information for the first link. Similarly, the UE 1101 may measure a time delay between transmission and reception (or variation in the time delay) and a Doppler shift (or variation in the Doppler shift value) by using the second RS received via the second satellite 1112. The measured information may be measurement information for the second link.

In step S1210, the UE 1101 may transmit a reference signal measurement report message to the base station 1121. The reference signal measurement report message may include the measurement information of the first link and the measurement information of the second link, as described above. The UE 1101 may transmit the reference signal measurement report message periodically or based on a specific request. For example, when a request message from the base station 1121 requesting a reference signal measurement report is received, the UE 1101 may transmit the reference signal measurement report message to the base station 1121. In another example, the UE 1101 may transmit the reference signal measurement report message to base station 1121 at a preconfigured periodicity.

Additionally, when the UE 1101 has only one link, for example, when a single satellite is currently serving, the UE 1101 may transmit the reference signal measurement report message through the link formed with the single serving satellite. In another example, when the UE 1101 is served by both satellites, the reference signal measurement report message may be transmitted using either a single link or both links. In this case, when two links are used, the reference signal measurement report messages transmitted through the two links may include the same information or different information. When the reference signal measurement report messages include the same information, the messages may contain the measurement information of both the first link and the second link. On the other hand, when the reference signal measurement report messages include different information, the messages may be transmitted separately for the respective links. For example, the measurement information of the first link may be transmitted via the first satellite 1111 corresponding to the first link, while the measurement information of the second link may be transmitted via the second satellite 1112 corresponding to the second link.

Accordingly, in step S1210, the base station 1121 may receive the reference signal measurement report message through either a single link or two links.

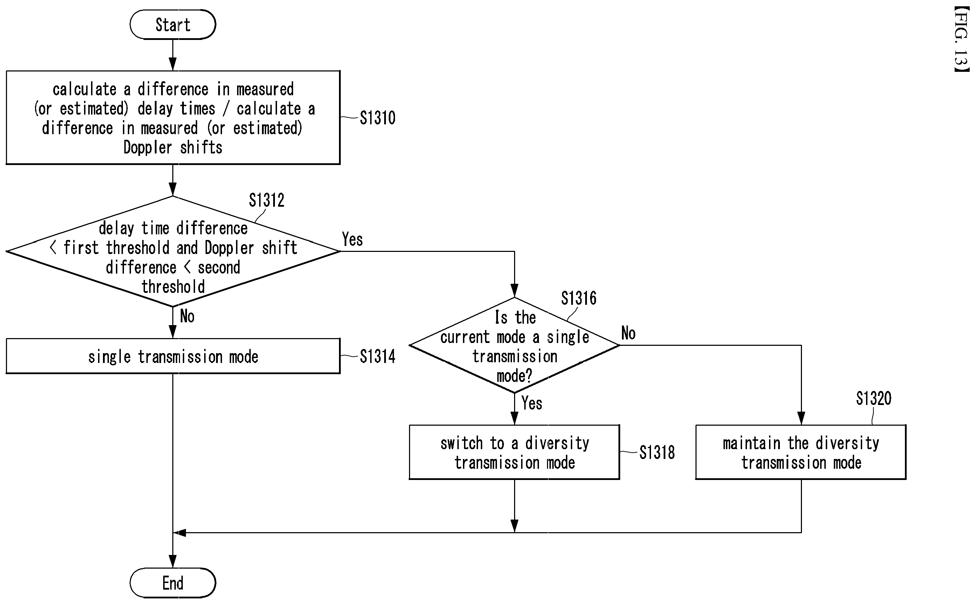

In step S1220, the base station 1121 may determine a transmission mode based on the received reference signal measurement report message. The operation of determining the transmission mode will be further described in FIG. 13.

In step S1230, the base station 1121 may transmit data to the UE 1101 according to the determined mode. For example, when the determined mode is the diversity mode, the base station 1121 may transmit data to the UE 1101 via the first satellite 1111 and second satellite 1112. On the other hand, when the determined mode is the single transmission mode, the base station 1121 may transmit data to the UE 1101 via the serving satellite.

FIG. 13 is a flowchart illustrating operations of a base station when determining a transmission mode according to the first exemplary embodiment of the present disclosure.

The base station 1121 may have already received the reference signal measurement report message from the UE 1101, as described in FIG. 12. The base station 1121 may have obtained the measurement information of the first link and the measurement information of the second link included in the reference signal measurement report message. Each of the measurement information of the first link and the measurement information of the second link may include the time delay between transmission and reception for each link (or variation in the time delay) and the Doppler shift for each link (or variation in the Doppler shift), as described above. Accordingly, the base station 1121 may have obtained the time delay between transmission and reception for each link (or variation in the time delay) and the Doppler shift for each link (or variation in the Doppler shift).

In step S1310, the base station 1121 may calculate a difference in the time delay between the two links. For example, a difference between the time delay for the first link and the time delay for the second link may be calculated. In this case, the difference (i.e. time delay difference) between the two values may be taken as an absolute value. Additionally, the base station 1121 may calculate a difference in the Doppler shift between the two links. For example, a difference between the Doppler shift for the first link and the Doppler shift for the second link may be calculated. In this case as well, the difference (i.e. Doppler shift difference) between the two values may be taken as an absolute value.

In step S1312, the base station 1121 may check whether the time delay difference is smaller than a preconfigured first threshold. Additionally, the base station 1121 may check whether the Doppler shift difference is smaller than a preconfigured second threshold. Here, the first threshold and the second threshold may be thresholds that determine whether diversity transmission can be performed.

If the result of the check in step S1312 indicates that the time delay difference is greater than or equal to the preconfigured first threshold or the Doppler shift difference is greater than or equal to the preconfigured second threshold, the base station 1121 may proceed to step S1314. On the other hand, if the result of the check in step S1312 indicates that the time delay difference is smaller than the preconfigured first threshold and the Doppler shift difference is smaller than the preconfigured second threshold, the base station 1121 may proceed to step S1316.

In step S1314, since either the time delay difference is greater than or equal to the preconfigured first threshold or the Doppler shift difference is greater than or equal to the preconfigured second threshold, the base station 1121 may determine that diversity transmission is not possible. Accordingly, the base station 1121 may determine that the single transmission mode needs to be performed.

When proceeding to step S1316, since the time delay difference is smaller than the preconfigured first threshold and the Doppler shift difference is smaller than the preconfigured second threshold, the base station 1121 may check the current mode. If the current mode is the single transmission mode, the base station 1121 may proceed to step S1318, and if the current mode is the diversity transmission mode, the base station 1121 may proceed to step S1320.

In step S1318, since the previously checked conditions indicate that diversity transmission can be performed and the current transmission mode is the single transmission mode, the base station 1121 may determine to switch to the diversity transmission mode.

In step S1320, since the previously checked conditions indicate that diversity transmission can be performed and the current transmission mode is the diversity transmission mode, the base station 1121 may determine to maintain the diversity transmission mode.

In the procedures described in FIG. 12 and FIG. 13, if the current transmission mode is the diversity transmission mode, the other procedures may be periodically repeated except for step S1200 of FIG. 12, which performs the diversity transmission request. In other words, the base station 1121 may determine at a preconfigured periodicity whether to maintain the diversity transmission mode or switch to the single transmission mode. Accordingly, the base station 1121 and UE 1101 may either maintain the current mode (e.g. maintaining the single transmission mode or maintaining the diversity transmission mode) or switch to the other mode (e.g. switching from the single transmission mode to the diversity transmission mode or switching from the diversity transmission mode to the single transmission mode).

FIG. 12 and FIG. 13 do not illustrate an operation of transmitting information regarding the determined mode, such as maintaining the diversity transmission mode, switching to the diversity transmission mode, maintaining the single transmission mode, or switching to the single transmission mode. However, a person skilled in the art would understand that the base station 1121 may transmit such mode information to the UE 1101. Additionally, the mode information may be transmitted through downlink control information (DCI), MAC-CE, or RRC message.

## Second exemplary embodiment: Method for switching between satellite diversity mode and single transmission mode in DL transmission

The second exemplary embodiment of the present disclosure provides a method for switching between the satellite diversity transmission mode and the single transmission mode in NTN environments. Hereinafter, the satellite diversity mode may refer to a technique for obtaining diversity gain by transmitting signals via two or more satellites. Since the following description pertains to the diversity mode in the NTN environment, the diversity mode may refer to the satellite diversity mode.

The second exemplary embodiment of the present disclosure provides a method in which the base station is capable of determining whether to perform the diversity transmission mode or the single transmission mode when estimation of time delays and Doppler shifts is possible based on ephemeris information and location information of the UE. To achieve this, the present disclosure assumes that the UE periodically transmits its location information to the base station. Accordingly, the base station may periodically receive the location information from the UE. Additionally, the base station may either have prior knowledge of the ephemeris of satellites, calculate and derive location information of the satellites, or receive satellite location information from each satellite.

The operations according to the second exemplary embodiment of the present disclosure also follow the same principle described in the first exemplary embodiment, where the diversity transmission mode involving joint transmission (JT) is applied when the differences in time delay and Doppler shift between the two links in the NTN environment are within a certain level, and the single transmission mode is applied when the difference(s) exceed the certain level. The second exemplary embodiment of the present disclosure may also be used when the base station does not have a function for link-specific timing and Doppler shift pre-compensation.

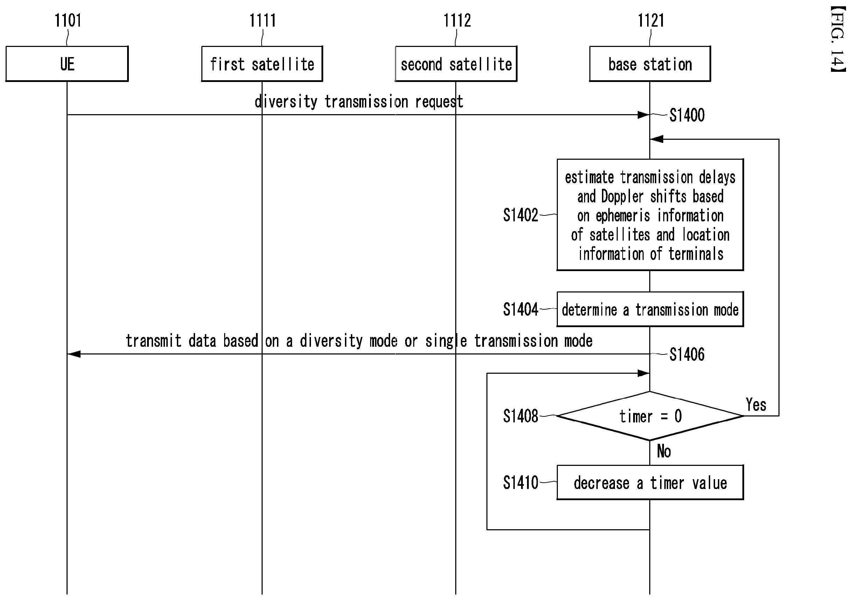

FIG. 14 is a sequence chart illustrating a measurement-based switching operation between a satellite diversity transmission mode and a single transmission mode in NTN.

The entities in FIG. 14 use the same reference numerals as in FIG. 12. However, it should be noted that the operations of each entity, such as the UE 1101, first satellite 1111, second satellite 1112, and base station 1121, follow the operations described below.

The base station 1121 illustrated in FIG. 14 may be directly connected to the gateway 1131 illustrated in FIG. 11, may be configured as a single system, or may be connected to the gateway 1131 via another network. Accordingly, the base station 1121 described in FIG. 14 may refer to a base station connected to the gateway 1131 illustrated in FIG. 11.

FIG. 14 describes the satellite diversity mode using two satellites, namely, two links using the first satellite 1111 and second satellite 1112. However, it should be noted that when three or more satellites form a multi-NTN communication area, as described in FIG. 11, three or more satellites may also be utilized.

In step S1400, the UE 1101 may transmit a diversity transmission request message to the base station 1121. FIG. 14 illustrates a case in which the UE 1101 transmits the diversity request message to the base station 1121, but it is also possible that the base station 1121 transmits a diversity transmission request message to the UE 1101. Accordingly, the base station 1121 may receive the diversity transmission request message from the UE 1101.

Meanwhile, as previously described, the transmission of the diversity transmission request message may occur when the UE 1101 is located in a multi-NTN communication area. Additionally, the diversity transmission request message may be transmitted to the base station 1121 via the first satellite 1111 or via the second satellite 1112. In other words, the diversity transmission request message may be a message transmitted when the UE 1101 is in the single transmission mode. In this case, the satellite used by the UE 1101 to transmit the diversity transmission request message may be a serving satellite.

In another example, the diversity transmission request message may also be transmitted when the UE 1101 is currently in the diversity transmission mode but intends to maintain the diversity transmission mode. In such a case, the diversity transmission request message may be transmitted via the first satellite 1111 and/or second satellite 1112. In other words, the diversity transmission request message may be transmitted via a single satellite, or via both satellites.

Criteria for determining whether the UE 1101 is located in a multi-NTN communication area may be whether signals are received from two or more satellites and/or location information of the UE 1101 and location information of the satellites 1111 and 1112 derived from ephemeris information. When the UE 1101 is located in a multi-NTN communication area, the UE 1101 may determine that diversity transmission is possible. In another example, even when the UE 1101 is located in a multi-NTN communication area, the diversity transmission request may be selectively made based on a quality of the received signals and/or service requirements. For example, when the quality of the received signals is good, diversity transmission may not be required for the UE 1101. In another example, when relatively low-speed data services that are insensitive to delay are provided, transmitting the diversity transmission request message may not be required. Accordingly, the UE 1101 may determine whether transmission of the diversity transmission request message to the base station 1121 is required by utilizing various types of information. FIG. 14 illustrates a case in which transmitting the diversity transmission request message is required based on at least one of the criteria described above.

The diversity transmission request message according to the present disclosure may be dynamically transmitted in form of an event trigger. In other words, the diversity transmission request message may be transmitted at any time when an event is triggered. In another example, according to the present disclosure, the diversity transmission request message may indicate a request or release of diversity transmission in a semi-static manner at a predetermined periodicity. In this case, the request periodicity may be determined based on the location of the UE 1101, ephemeris information, and the movement speeds of the satellites.

In step S1402, the base station 1121 may estimate time delays and Doppler shifts based on the ephemeris information of the satellites 1111 and 1112 and the location information of UE. Here, the ephemeris information of the satellites 1111 and 1112 may include information of a specific orbital and location on Earth, as illustrated in FIG. 10A. In other words, the ephemeris information of the satellites 1111 and 1112 may include information on latitudes, longitudes, and altitudes of the satellites 1111 and 1112. Additionally, the location information of the UE 1101 may be based on the location information of the UE 1101 periodically reported to the base station 1121, as described earlier. In this case, when the UE 1101 is being served by a single serving satellite, the UE 1101 may transmit the location information to the base station 1121 via the serving satellite. If the UE 1101 is being served by two or more satellites in the diversity transmission mode, the UE 1101 may transmit the location information to the base station 1121 using either one of the two satellites or both satellites.

In step S1404, the base station 1121 may determine a transmission mode based on the estimated time delays and Doppler shifts. The operation for determining the transmission mode may follow the process described in FIG. 13. Additionally, after determining the transmission mode, the base station 1121 may set a timer value to a preconfigured time value. Here, the timer may serve as a mechanism for updating information since the location information of the UE and the ephemeris information of the satellites continuously change.

However, unlike FIG. 13, where the difference in time delay is calculated based on the measured values reported by the UE 1101, in FIG. 14, the difference may be calculated based on estimated time delays. Similarly, while the difference between the measured Doppler shifts is calculated in the case of FIG 13, the difference in Doppler shift may be obtained from the estimated Doppler shifts in th case of FIG. 14.

In step S1406, the base station 1121 may transmit data to the UE 1101 according to the determined mode. For example, when the determined mode is the diversity mode, the base station 1121 may transmit data to the UE 1101 via the first satellite 1111 and second satellite 1112. On the other hand, when the determined mode is the single transmission mode, the base station 1121 may transmit data to the UE 1101 via the serving satellite.

In step S1408, the base station 1121 may check whether a value of the timer reaches zero. If the result of the check in step S1408 indicates that the value of the timer is zero, the base station 1121 may proceed to step S1402. On the other hand, if the result of the check in step S1408 indicates that the value of the timer is not zero, the base station 1121 may proceed to step S1410 to decrease the value of the timer. Here, a fixed value may be used for the timer. In another example, a setting value for the timer may dynamically vary depending on a situation.

In the example of FIG. 14, the timer may be set as a time value for repeatedly performing steps following step S1402. Accordingly, instead of using the timer, steps S1408 and S1410 may be replaced with a step for checking whether a predefined time (or period) elapses. If the process is modified to check whether the predefined time elapses, the next check time may be set before proceeding to step S1402. Additionally, even when the timer is used, if the value of the timer reaches zero, the timer may be reset. The methods of using the timer or the predefined time (or period) may all apply when the UE 1101 is in active communication. In other words, these operations may not be performed when the UE 1101 is in the inactive mode or idle mode.

**Third exemplary embodiment: Downlink transmission mode switching method between satellite diversity mode and single transmission mode**

The third exemplary embodiment of the present disclosure described below provides a switching method between a satellite diversity transmission mode and a single transmission mode in NTN environments. Hereinafter, the satellite diversity mode may refer to a technique for obtaining diversity gain by transmitting signals via two or more satellites. Since the following description pertains to the diversity mode in the NTN environment, the diversity mode may refer to the satellite diversity mode.

In the third exemplary embodiment of the present disclosure, when a time delay difference and a Doppler shift difference between two links in the diversity transmission mode are smaller than respective threshold values, a joint transmission (JT) mode may be applied. Conversely, when the time delay difference and the Doppler shift difference between two links are greater than the respective threshold values, a non-joint transmission (non-JT) mode may be applied.

When the JT mode and the non-JT mode are used, the corresponding part described in FIG. 13 may be modified as in the third exemplary embodiment of the present disclosure.

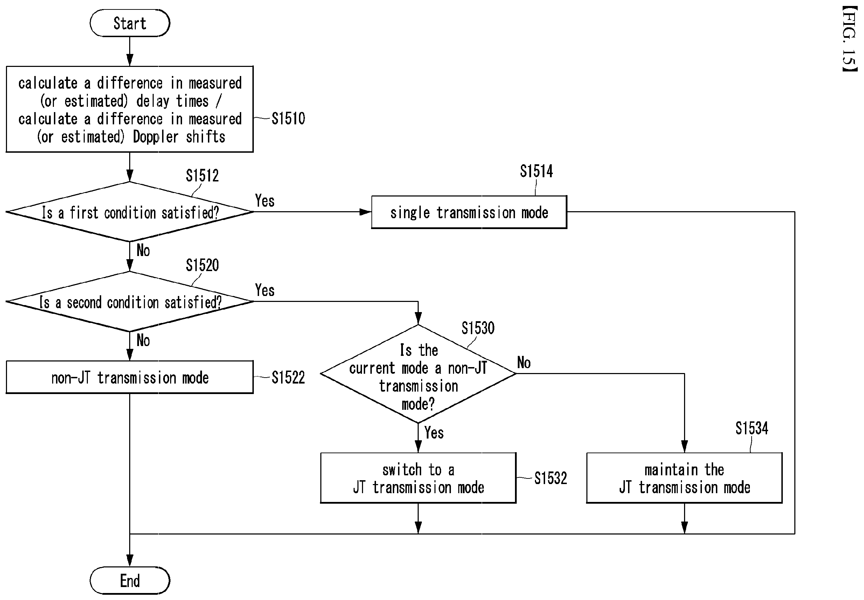

FIG. 15 is a flowchart illustrating a switching operation between a JT mode and a non-JT mode in NTN.

In step S1510, the base station 1121 may calculate a difference in measured time delay or calculate a difference in estimated time delay. Here, the difference in the measured time delay may be obtained as follows: the base station 1121 may control reference signals to be transmitted to the UE 1101 via the first satellite 1111 and the second satellite 1112 and receive a reference signal measurement report from the UE 1101. In other words, the measured time delays may be obtained through steps S1220 to S1210 described in FIG. 12.

Additionally, the difference in the estimated time delay may be calculated using the time delays estimated through step S1402, as described in FIG. 14.

In step S1510, the base station 1121 may also calculate a difference in the measured Doppler shift or calculate a difference in the estimated Doppler shift. The difference in the measured Doppler shift may be obtained through steps S1220 to S1210 described in FIG. 12, as described above. Meanwhile, the difference in the estimated Doppler shift may be estimated through step S1402, as described in FIG. 14.

In step S1512, the base station 1121 may check whether the calculated (or estimated) time value difference and the calculated (or estimated) Doppler shift difference satisfy a first condition. For convenience of description, FIG. 15 is described using the calculated time value difference and the calculated Doppler shift difference. However, it should be noted that the following description equally applies when using the estimated time value difference and the estimated Doppler shift difference.

Here, the first condition may use threshold values for determining the single transmission mode. As described in FIG. 12 and FIG. 13, the base station 1121 may check whether the calculated time delay difference is less than a first threshold value and the calculated Doppler shift difference is less than a second threshold value. If either of the two values is equal to or greater than the corresponding threshold value, the single transmission mode may need to be performed.

For example, step S1512, which checks whether the first condition is satisfied, may be a step that checks whether a condition for the single transmission mode is satisfied. If the result of the check in step S1512 indicates that the condition for the single transmission mode is satisfied, the base station 1121 may proceed to step S1514. On the other hand, if the result of the check in step S1512 indicates that the condition for the single transmission mode is not satisfied, the base station 1121 may proceed to step S1520.

In step S1514, the base station 1121 may determine that the single transmission mode needs to be performed. In other words, the base station 1121 may determine the mode in which services are provided to the UE 1101 via only one satellite.

In step S1520, the base station 1121 may check whether a second condition is satisfied. Here, the second condition may be a set of conditions for determining whether JT mode is possible. The JT mode may be possible when the calculated time delay difference is within a third threshold value, which is smaller than the first threshold value, and the calculated Doppler shift difference is within a fourth threshold value, which is smaller than the second threshold value. Here, the first threshold value may be denoted as $\delta_{T2}$, the second threshold value may be denoted as $\delta_{F2}$, the third threshold value may be denoted as $\delta_T$, and the fourth threshold value may be denoted as $\delta_F$. Then, satisfying the first condition as described above may correspond to satisfying either of Equation 1 or 2 below.

[Equation 1]

$$calculated\ time\ delay\ difference\ \geq\ \delta_{T2}$$

[Equation 2]

$$calculated\ Doppler\ shift\ difference\ \geq\ \delta_{F2}$$

Meanwhile, satisfying the second condition may correspond to simultaneously satisfying Equations 3 and 4.

[Equation 3]

$$calculated\ time\ delay\ difference\ <\ \delta_T$$

[Equation 4]

$$calculated\ Doppler\ shift\ difference\ <\ \delta_F$$

Accordingly, the base station 1121 may check whether Equations 3 and 4 are satisfied. If the result of check in step S1520 indicates that the second condition is satisfied, the base station 1121 may proceed to step S1530. If the result of the check in step S1520 indicates that the second condition is not satisfied, the base station 1121 may proceed to step S1522.

In step S1522, the base station 1121 may determine that a non-JT mode needs to be performed. In other words, the base station 1121 may transmit different data via each of the satellites 1111 and 1112 or may perform data transmission using only one satellite.

In step S1530, the base station 1121 may check whether the current mode is a non-JT mode. If the current mode is the non-JT mode, the base station 1121 may proceed to step S1532. If the current mode is the JT mode, the base station 1121 may proceed to step S1534.

In step S1532, the base station 1121 may switch the current mode to the JT mode. In other words, mode switching may be performed.

In step S1534, since the current mode is the JT mode and the JT mode can be performed, the base station 1121 may maintain the JT mode.

The FIG. 15 described above may replace the transmission mode determination step of FIG. 12 and/or FIG. 14. If the transmission mode determination step of FIG. 12 is modified into the form described in FIG. 15, step S1200 of FIG. 12 may be omitted or replaced with a 'joint transmission request message'. Similarly, if the transmission mode determination step of FIG. 14 is modified into the form of FIG. 15, step S1400 of FIG. 14 may be omitted or replaced with a 'joint transmission request message'.

**Fourth exemplary embodiment: Timing and Doppler shift pre-compensation method for satellite diversity mode**

The fourth exemplary embodiment of the present disclosure described below provides a method for pre-compensating a timing and Doppler shift of a satellite diversity transmission mode in NTN environments. Hereinafter, the satellite diversity mode may refer to a technique for obtaining diversity gain by transmitting signals via two or more satellites. Since the following description pertains to the diversity mode in the NTN environment, the diversity mode may refer to the satellite diversity mode.

When a time delay difference and a Doppler shift difference between two links in the NTN environment, for example, a link via a first satellite and a link via a second satellite, are below a certain level, the diversity in the JT scheme described in the third exemplary embodiment may be applied. However, in the third exemplary embodiment, the JT diversity method is applied only when the second condition is satisfied, meaning that the time delay difference and Doppler shift difference are within a predetermined range. In contrast, in the fourth exemplary embodiment of the present disclosure, a method of applying the diversity transmission mode through pre-compensation even when at least one of the conditions of Equations 3 and 4 is not satisfied is provided. Therefore, this method may be used when a base station has a pre-compensation function that allows performing time delay (or timing) and Doppler shift compensation for each individual link.

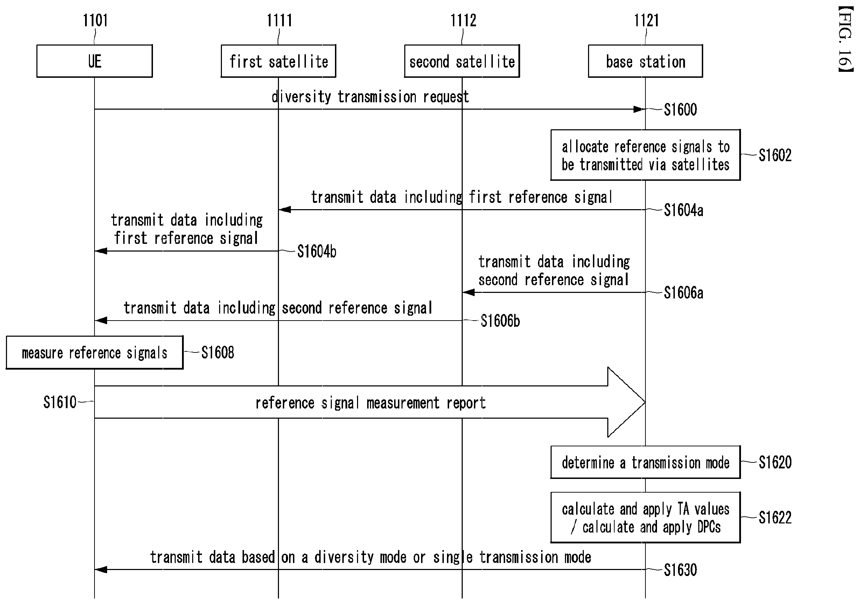

FIG. 16 is a sequence chart illustrating a method for performing a satellite diversity transmission mode based on pre-compensation in an NTN.

The entities in FIG. 16 use the same reference numerals as in FIGS. 12 and 14. However, it should be noted that the operations of each entity, such as the UE 1101, first satellite 1111, second satellite 1112, and base station 1121, follow the operations described below.

The base station 1121 illustrated in FIG. 16 may be directly connected to the gateway 1131 illustrated in FIG. 11, may be configured as a single system, or may be connected to the gateway 1131 via another network. Accordingly, the base station 1121 described in FIG. 16 may refer to a base station connected to the gateway 1131 illustrated in FIG. 11.

FIG. 16 describes the satellite diversity mode using two satellites, namely, two links using the first satellite 1111 and second satellite 1112. However, it should be noted that when three or more satellites form a multi-NTN communication area, as described in FIG. 11, three or more satellites may also be utilized.

Although not illustrated in FIG. 16, the base station 1121 may have instructed the UE 1101 to report location information at a preconfigured periodicity. Accordingly, the UE 1101 may report the location information to the base station 1121 via a serving satellite at the preconfigured periodicity. In the following description, it should be noted that the process in which the UE 1101 reports location information at the preconfigured periodicity is not illustrated in FIG. 16.

In step S1600, the UE 1101 may transmit a diversity transmission request message to the base station 1121. FIG. 16 illustrates the case where the UE 1101 transmits the diversity request message to the base station 1121. However, it is also possible that the base station 1121 transmits a diversity request message to the UE 1101. Accordingly, the base station 1121 may receive the diversity transmission request message from the UE 1101. In addition, since the diversity transmission request message in step S1600 is the same as described in FIG. 12 and FIG. 14, redundant descriptions are omitted.

In step S1602, the base station 1121 may allocate reference signals (RS) to be transmitted via the satellites 1111 and 1112 to the respective satellites based on the received diversity transmission request message. Step S1602 may correspond to step S1202 described in FIG. 12. Therefore, redundant descriptions are omitted.

In steps S1604a and S1606a, the base station 1121 may transmit data including a first reference signal and a second reference signal via the first satellite 1111 and the second satellite 1112, respectively. Steps S1604a and S1606a may correspond to steps S1204a and S1206a described in FIG. 12. Additionally, steps S1604b and S1606b may correspond to steps S1204b and S1206b described in FIG. 12.

In step S1608, the UE 1101 may measure the reference signals received from the first satellite 1111 and the second satellite 1112 and may obtain measurement information. Here, the measurement information may include a time delay between transmission and reception for each link (or variation in the time delay) and a Doppler shift for each link (or variation in the Doppler shift). Step S1608 may correspond to step S1208 described in FIG. 12.

In step S1610, the UE 1101 may transmit a reference signal measurement report message to the base station 1121. The reference signal measurement report message may include measurement information of a first link and measurement information of a second link, as described above. Step S1610 may correspond to step S1210 described in FIG. 12. Accordingly, in step S1610, the base station 1121 may receive the reference signal measurement report message via one link or two links.

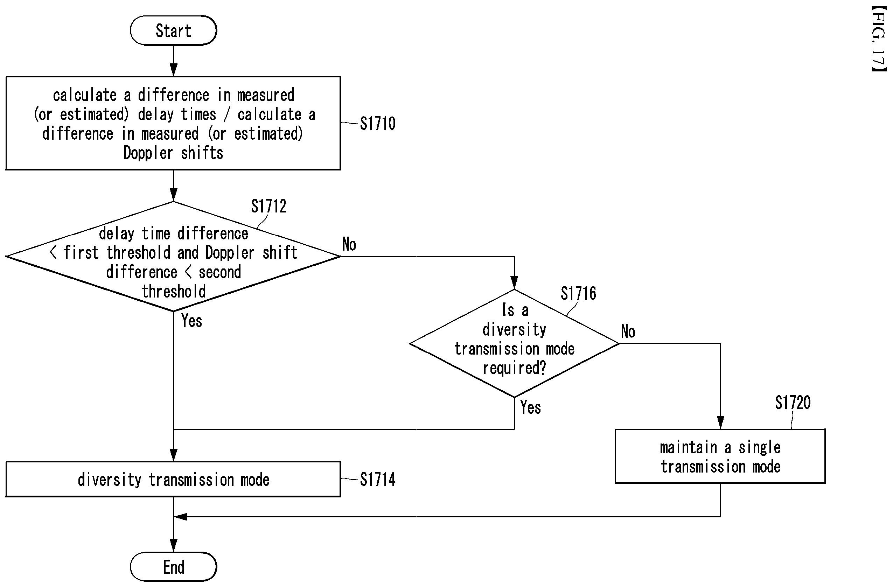

In step S1620, the base station 1121 may determine a transmission mode based on the received reference signal measurement report message. The operation for determining the transmission mode is described with reference to FIG. 17.

In step S1622, the base station 1121 may calculate and apply timing advance (TA) values. At this time, the TA values may correspond to TA values via the respective satellites 1111 and 1112. Additionally, the base station 1121 may calculate and apply Doppler pre-compensations (DPCs). Step S1622 will be described as an example.

A difference in time delay between the first satellite 1111 and the second satellite 1112 may be greater than a first threshold value set for the diversity transmission mode. In such a case, based on the TA values, the time delay difference may be compensated so that the difference becomes smaller than the first threshold value. At this time, the time delay compensation may adjust a time delay of a link with a larger time delay. Conversely, the time delay compensation may adjust a time delay of a link with a smaller time delay. Through the time delay compensation, the time delay difference between the first link via the first satellite 1111 and the second link via the second satellite 1112 may be compensated to be within the first threshold value applicable to the diversity transmission mode.

Additionally, a difference in Doppler shift between the first satellite 1111 and the second satellite 1112 may be greater than a predetermined second threshold value. In such a case, based on the measured (or estimated) Doppler shifts, DPC may be performed for a satellite with a larger Doppler shift. If the Doppler shift of the first satellite 1111 is larger, DPC may be performed for the first link via the first satellite 1111 so that the difference in Doppler shift between the first link and the second link is compensated to be within the second threshold value.

In step S1630, the base station 1121 may transmit data to the UE 1101 using the determined mode. For example, if the determined mode is a diversity mode, the base station 1121 may transmit data to the UE 1101 via the first satellite 1111 and the second satellite 1112. On the other hand, if the determined mode is a single transmission mode, the base station 1121 may transmit data to the UE 1101 via a serving satellite.

FIG. 17 is a flowchart illustrating operations of a base station in determining a transmission mode according to the fourth exemplary embodiment of the present disclosure.

The base station 1121 may have received the reference signal measurement report message from the UE 1101, as described in FIG. 16. Alternatively, the base station 1121 may have estimated the time delay between transmission and reception for each link (or variation in the time delay) and the Doppler shift for each link (or variation in the Doppler shift), as described in FIG. 14. In the following description, description is made based on the state where the base station 1121 has received the time delay between transmission and reception for each link (or variation in the time delay) and the Doppler shift for each link (or variation in the Doppler shift) from the reference signals, as illustrated in FIG. 16. However, it should be noted that estimated values may also be used, as in step S1402 of FIG. 14.

In step S1710, the base station 1121 may calculate a difference in time delay between the two links. For example, the base station 1121 may calculate a difference between the time delay of the first link and the time delay of the second link. At this time, the difference between the two values may be taken as an absolute value. Additionally, the base station 1121 may calculate a difference in Doppler shift between the two links. For example, the base station 1121 may calculate a difference between the Doppler shift of the first link and the Doppler shift of the second link. Similarly, the difference between the two values may be taken as an absolute value.

In step S1712, the base station 1121 may check whether the difference in time delay between the two links (i.e. delay time difference) is smaller than a preconfigured first threshold value. Additionally, the base station 1121 may check whether the difference in Doppler shift between the two links (i.e. Doppler shift difference) is smaller than a preconfigured second threshold value. Here, the first threshold value and the second threshold value may be threshold values for performing diversity transmission.

If the result of the check in step S1712 indicates that the time delay difference is equal to or greater than the preconfigured first threshold value or the Doppler shift difference is equal to or greater than the preconfigured second threshold value, the base station 1121 may proceed to step S1716. On the other hand, if the result of the check in step S1712 indicates that the time delay difference is smaller than the preconfigured first threshold value and the Doppler shift difference is smaller than the preconfigured second threshold value, the base station 1121 may proceed to step S1714.

In step S1714, since the time delay difference is smaller than the preconfigured first threshold value and the Doppler shift difference is smaller than the preconfigured second threshold value, the base station 1121 may determine that diversity transmission is possible. Accordingly, the base station 1121 may determine that the diversity transmission mode needs to be performed.

On the other hand, if the result of the check in step S1712 indicates that the time delay difference is equal to or greater than the preconfigured first threshold value or the Doppler shift difference is equal to or greater than the preconfigured second threshold value, the base station 1121 may proceed to step S1716 and check whether diversity transmission mode is required. In the previously described exemplary embodiments, cases where the base station 1121 does not have compensation capability have been described. However, the base station 1121 described in FIG. 16 and FIG. 17 may have compensation capability. Therefore, if diversity transmission mode is required, the base station 1121 may proceed to step S1714 and determine that the diversity transmission mode needs to be performed.

On the other hand, if the result of the check in step S1716 indicates that the diversity transmission mode is not required, the base station 1121 may proceed to step S1720 and maintain the single transmission mode.

The exemplary embodiments described in FIG. 16 and FIG. 17 may correspond to cases where the base station 1121 has compensation capability. Additionally, even when the base station 1121 has compensation capability, an operator may turn the compensation capability on or off. Therefore, assuming that the compensation capability of the base station 1121 can be turned on or off, the first to third exemplary embodiments described above may correspond to a state in which the base station 1121 has compensation capability but it is turned off, whereas the fourth exemplary embodiment may correspond to a state in which the compensation capability of the base station 1121 is turned on.

**Fifth exemplary embodiment: Uplink switching method between satellite diversity mode and single transmission mode**

In the fifth exemplary embodiment of the present disclosure described below, a satellite diversity transmission mode and a single transmission mode in uplink (UL) in NTN environments will be described, with a particular focus on uplink satellite diversity transmission mode and single transmission mode. The uplink satellite diversity transmission mode may refer to a technique in which a UE transmits signals via two or more satellites to obtain diversity gain. Since the following description pertains to the diversity mode in the NTN environment, the diversity mode may refer to the satellite diversity mode. However, the distinguishing feature from the previous exemplary embodiments is that the fifth exemplary embodiment focuses on the uplink diversity mode.

To satisfy the conditions of the fifth exemplary embodiment of the present disclosure, a UE may need to have either two transmission modules or be configured so that a single internal transmission module can transmit signals to different satellites. When two transmission modules are used, a first transmission module may transmit signals to the first satellite 1111, and a second transmission module may transmit signals to the second satellite 1112. Accordingly, when using two transmission modules, a first UL link directed toward the base station 1121 via the first satellite 1111 and a second UL link directed toward the base station 1121 via the second satellite 1112 may each be configured.

Each of the first UL link and the second UL link may have a different time delay and a different Doppler shift, as described earlier. As described in the first to fourth exemplary embodiments, switching between a UL single transmission mode and a UL diversity transmission mode may be performed based on the time delay difference and Doppler shift difference. In this case, since each link has an independent transmission module, independent timing and Doppler shift pre-compensation control may be performed. Accordingly, as described in the fourth exemplary embodiment, the UE 1101 may compensate for the time delays and perform DPC in advance to enable the uplink diversity transmission mode.

On the other hand, if the UE 1101 has a single UL transmission module, timing and Doppler shift pre-compensation control cannot be performed independently for each link. Therefore, in this case, since the diversity gain may deteriorate if a quality of one link is too poor, a pre-compensation scheme using an appropriate intermediate value may be used. For example, if the impact of Doppler shift is linear, pre-compensation may be performed based on an intermediate value, whereas if the impact is nonlinear, an algorithm to determine an appropriate value may be required. Various forms of such algorithms may exist. Therefore, in the present disclosure, a detailed description of the DPC method to compensate for the Doppler shift in cases where the impact of the Doppler shift is nonlinear is omitted.

Additionally, the UE 1101 may be aware of its own location. The satellite may broadcast its own location, or the UE 1101 may possess information for identifying the satellite's location in advance. Accordingly, it should be noted that not only measured values, as in the first exemplary embodiment, but also estimated values, as described in the second exemplary embodiment, may be used.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a base station, comprising:

    allocating a reference signal (RS) corresponding to each of a first satellite and a second satellite;
    controlling the first satellite and the second satellite to transmit an RS and data corresponding to each satellite to a user equipment (UE);
    receiving an RS measurement report message from the UE;
    determining a transmission mode among a single transmission mode for transmitting data via one of the first satellite and the second satellite or a diversity transmission mode for transmitting data via both the first satellite and the second satellite, based on the received RS measurement report message; and
    transmitting data to the UE based on the determined transmission mode,
    wherein the RS measurement report message includes a first time delay and a first Doppler shift based on a first RS received through a first link via the first satellite and a second time delay and a second Doppler shift based on a second RS received through a second link via the second satellite.

2. The method according to claim 1, wherein the diversity transmission mode is determined when a difference between the first time delay and the second time delay is less than a predetermined first threshold value, and a difference between the first Doppler shift and the second Doppler shift is less than a predetermined second threshold value.

3. The method according to claim 1, wherein the single transmission mode is determined when a difference between the first time delay and the second time delay is greater than or equal to a predetermined first threshold value or when a difference between the first Doppler shift and the second Doppler shift is greater than or equal to a predetermined second threshold value.

4. The method according to claim 1, wherein the RS measurement report message is received via a serving satellite among the first satellite and the second satellite.

5. The method according to claim 1, wherein the RS measurement report message is composed of a first RS measurement report message received through the first link and a second RS measurement report message received through the second link, the first RS measurement report message includes the first time delay and the first Doppler shift, and the second RS measurement report message includes the second time delay and the second Doppler shift.

6. The method according to claim 1, wherein the allocating of the RS corresponding to each of the first satellite and the second satellite is performed when a diversity transmission request is received from the UE.

7. The method according to claim 1, further comprising:

receiving a diversity transmission request from the UE;
compensating for the first time delay so that a difference between the first time delay and the second time delay becomes less than a predetermined first threshold value when the transmission mode determined based on the RS measurement report message is the single transmission mode;
compensating for the first Doppler shift so that a difference between the first Doppler shift and the second Doppler shift becomes less than a predetermined second threshold value; and
determining the diversity transmission mode by applying the compensated values.

8. The method according to claim 7, wherein the first link having the first time delay has a longer time delay than the second link.

9. A base station comprising at least one processor, wherein the at least one processor causes the base station to perform:

allocating a reference signal (RS) corresponding to each of a first satellite and a second satellite;
controlling the first satellite and the second satellite to transmit an RS and data corresponding to each satellite to a user equipment (UE);
receiving an RS measurement report message from the UE;
determining a transmission mode among a single transmission mode for transmitting data via one of the first satellite and the second satellite or a diversity transmission mode for transmitting data via both the first satellite and the second satellite, based on the received RS measurement report message; and
transmitting data to the UE based on the determined transmission mode,
wherein the RS measurement report message includes a first time delay and a first Doppler shift based on a first RS received through a first link via the first satellite and a second time delay and a second Doppler shift based on a second RS received through a second link via the second satellite.

10. The base station according to claim 9, wherein the diversity transmission mode is determined when a difference between the first time delay and the second time delay is less than a predetermined first threshold value, and a difference between the first Doppler shift and the second Doppler shift is less than a predetermined second threshold value.

11. The base station according to claim 9, wherein the single transmission mode is determined when a difference between the first time delay and the second time delay is greater than or equal to a predetermined first threshold value or when a difference between the first Doppler shift and the second Doppler shift is greater than or equal to a predetermined second threshold value.

12. The base station according to claim 9, wherein the RS measurement report message is received via a serving satellite among the first satellite and the second satellite.

13. The base station according to claim 9, wherein the RS measurement report message is composed of a first RS measurement report message received through the first link and a second RS measurement report message received through the second link, the first RS measurement report message includes the first time delay and the first Doppler shift, and the second RS measurement report message includes the second time delay and the second Doppler shift.

14. The base station according to claim 9, wherein the at least one processor further causes the base station to perform: the allocating of the RS corresponding to each of the first satellite and the second satellite, when a diversity transmission request is received from the UE.

15. The base station according to claim 9, wherein the at least one processor further causes the base station to perform: receiving a diversity transmission request from the UE;

compensating for the first time delay so that a difference between the first time delay and the second time delay becomes less than a predetermined first threshold value when the transmission mode determined based on the RS measurement report message is the single transmission mode; compensating for the first Doppler shift so that a difference between the first Doppler shift and the second Doppler shift becomes less than a predetermined second threshold value; and determining the diversity transmission mode by applying the compensated values.

16. The base station according to claim 15, wherein the first link having the first time delay has a longer time delay than the second link.

【FIG. 1A】

【FIG. 1B】

NG-RAN or 6G-RAN

UE — NR Uu or 6G Uu — base station — NG or 6G — core network — N6 — data network

satellite / gateway / RRU

【FIG. 2A】

[FIG. 2B]

NG-RAN or 6G-RAN

UE

NR Uu or
6G Uu

satellite
(base station)

NG over SRI or 6G over SRI

gateway

NG or 6G

core network

N6

data
network

【FIG. 2C】

【FIG. 3】

【FIG. 4】

【FIG. 5A】

EP 4 560 935 A1

**[FIG. 5B]**

【FIG. 6A】

【FIG. 6B】

【FIG. 7A】

【FIG. 7B】

【FIG. 8A】

【FIG. 8B】

【FIG. 8C】

【FIG. 9A】

【FIG. 9B】

Comb-4 UL-PRS

frequency

one PRB

time

【FIG. 10A】

【FIG. 10B】

【FIG. 11】

[FIG. 12]

1101 — UE
1111 — first satellite
1112 — second satellite
1121 — base station

diversity transmission request — S1200

allocate reference signals to be transmitted via satellites — S1202

transmit data including first reference signal — S1204a

transmit data including first reference signal — S1204b

transmit data including second reference signal — S1206a

transmit data including second reference signal — S1206b

measure reference signals — S1208

S1210 — reference signal measurement report

determine a transmission mode — S1220

transmit data based on a diversity mode or single transmission mode — S1230

EP 4 560 935 A1

【FIG. 13】

Start

S1310 — calculate a difference in measured (or estimated) delay times / calculate a difference in measured (or estimated) Doppler shifts

S1312 — delay time difference < first threshold and Doppler shift difference < second threshold

Yes

S1316 — Is the current mode a single transmission mode?

No → S1320 — maintain the diversity transmission mode

Yes → S1318 — switch to a diversity transmission mode

No → S1314 — single transmission mode

End

[FIG. 14]

EP 4 560 935 A1

1101 — UE
1111 — first satellite
1112 — second satellite
1121 — base station

diversity transmission request → S1400

S1402 — estimate transmission delays and Doppler shifts based on ephemeris information of satellites and location information of terminals

S1404 — determine a transmission mode

transmit data based on a diversity mode or single transmission mode — S1406

S1408 — timer = 0
Yes
No
S1410 — decrease a timer value

[FIG. 15]

EP 4 560 935 A1

```
                    ┌─────────┐
                    │  Start  │
                    └─────────┘
                         │
                         ▼
    ┌────────────────────────────────────────┐
    │ calculate a difference in measured      │
    │      (or estimated) delay times /       │
    │ calculate a difference in measured      │── S1510
    │    (or estimated) Doppler shifts        │
    └────────────────────────────────────────┘
                         │
                         ▼                    S1514
              S1512                    ┌──────────────────────────┐
          ◇───────────◇      Yes      │                          │
         ╱             ╲─────────────▶│  single transmission mode │
        ╱ Is a first    ╲             │                          │
        ╲ condition     ╱             └──────────────────────────┘
         ╲ satisfied?  ╱
          ◇───────────◇
               │ No
               ▼             S1520
          ◇───────────◇      Yes
         ╱             ╲─────────────┐
        ╱ Is a second   ╲           │
        ╲ condition     ╱           │
         ╲ satisfied?  ╱            ▼              S1530
          ◇───────────◇       ◇──────────◇
               │ No           ╱  Is the    ╲      No
               ▼             ╱   current     ╲─────────────┐
    ┌────────────────────┐  ╲  mode a non-JT ╱             │
    │  non-JT            │  ╲ transmission  ╱              │
    │  transmission mode │── ◇   mode?    ◇                │
    └────────────────────┘       │                        │
          S1522                  │ Yes                     │
               │                 ▼                         ▼       S1534
               │        ┌──────────────────┐    ┌──────────────────┐
               │        │  switch to a     │    │  maintain the    │
               │        │  JT transmission │    │  JT transmission │
               │        │  mode            │    │  mode            │
               │        └──────────────────┘    └──────────────────┘
               │              │ S1532                   │
               ▼              │                         │
          ┌─────────┐         │                         │
          │   End   │◀────────┘                         │
          └─────────┘                                   │
```

[FIG. 16]

EP 4 560 935 A1

[FIG. 17]

EP 4 560 935 A1

```
                    ( Start )
                        |
                        v
    +-------------------------------------------+
    | calculate a difference in measured        |
    | (or estimated) delay times / calculate a  |---- S1710
    | difference in measured (or estimated)     |
    | Doppler shifts                            |
    +-------------------------------------------+
                        |
                        v
                                      S1712
              /\
             /  \  delay time difference
            /    \ < first threshold and Doppler shift   No
            \    /  difference < second             --------------+
             \  /    threshold                                    |
              \/                                                  v
               | Yes                                    S1716
               |                                       /\
               |                                      /  \   Is a
               |                                     /    \  diversity        No
               |                                     \    / transmission mode  ----+
               |                                      \  /  required?              |
               |                                       \/                         |
               |                                        | Yes                     |
               |                                        |                  S1720  |
               |                                        |                         v
               v                                        |          +---------------------+
    +-------------------------------+                   |          | maintain a single   |
    | diversity transmission mode   |---- S1714 <-------+          | transmission mode   |
    +-------------------------------+                              +---------------------+
               |                                                              |
               v <------------------------------------------------------------+
            ( End )
```

# EP 4 560 935 A1

## INTERNATIONAL SEARCH REPORT

International application No.

**PCT/KR2023/017158**

### A. CLASSIFICATION OF SUBJECT MATTER

**H04B 7/185**(2006.01)i; **H04W 24/08**(2009.01)i; **H04W 64/00**(2009.01)i; **H04W 84/06**(2009.01)i

According to International Patent Classification (IPC) or to both national classification and IPC

### B. FIELDS SEARCHED

Minimum documentation searched (classification system followed by classification symbols)

H04B 7/185(2006.01); G01S 19/38(2010.01); G01S 5/02(2010.01); H04B 17/40(2015.01); H04B 7/01(2006.01); H04B 7/0413(2017.01); H04L 5/00(2006.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위성(satellite), 참조 신호(reference signal), 측정 보고(measurement report), 단일 전송 모드(single transmission mode), 다이버시티 전송 모드(diversity transmission mode), 시간 지연(time delay), 도플러 쉬프트(doppler shift)

### C. DOCUMENTS CONSIDERED TO BE RELEVANT

| Category* | Citation of document, with indication, where appropriate, of the relevant passages | Relevant to claim No. |
|---|---|---|
| Y | CN 114696883 A (HUAWEI TECHNOLOGIES CO., LTD.) 01 July 2022 (2022-07-01) See paragraphs [0059], [0064]-[0065], [0087], [0095], [0103]-[0104] and [0120]-[0121]; and figures 2 and 4. | 1-16 |
| Y | WO 2022-157018 A1 (FRAUNHOFER-GESELLSCHAFT ZUR FÖRDERUNG DER ANGEWANDTEN FORSCHUNG E.V.) 28 July 2022 (2022-07-28) See page 17, lines 25-35; page 18, lines 9-10; page 44, lines 33-36 and page 46, lines 4-6; and figures 3-4. | 1-16 |
| A | CN 113824485 A (DATANG MOBILE COMMUNICATIONS EQUIPMENT CO., LTD.) 21 December 2021 (2021-12-21) See claims 1-11. | 1-16 |
| A | US 2020-0028541 A1 (TOTUM LABS, INC.) 23 January 2020 (2020-01-23) See paragraphs [0029]-[0039]; and figures 3-6. | 1-16 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 February 2024** | **15 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/017158** |

### C. DOCUMENTS CONSIDERED TO BE RELEVANT

| Category* | Citation of document, with indication, where appropriate, of the relevant passages | Relevant to claim No. |
|---|---|---|
| A | US 2022-0321207 A1 (QUALCOMM INCORPORATED) 06 October 2022 (2022-10-06)<br>See paragraphs [0068]-[0130]; and figures 3-9. | 1-16 |

## INTERNATIONAL SEARCH REPORT
### Information on patent family members

International application No.

**PCT/KR2023/017158**

| Patent document cited in search report | | | Publication date (day/month/year) | Patent family member(s) | | | Publication date (day/month/year) |
|---|---|---|---|---|---|---|---|
| CN | 114696883 | A | 01 July 2022 | EP | 4240072 | A1 | 06 September 2023 |
| | | | | US | 2023-0337163 | A1 | 19 October 2023 |
| | | | | WO | 2022-143000 | A1 | 07 July 2022 |
| WO | 2022-157018 | A1 | 28 July 2022 | CN | 117099022 | A | 21 November 2023 |
| | | | | EP | 4281807 | A1 | 29 November 2023 |
| | | | | KR | 10-2023-0132577 | A | 15 September 2023 |
| | | | | US | 2023-0358843 | A1 | 09 November 2023 |
| CN | 113824485 | A | 21 December 2021 | AU | 2021-201901 | A1 | 20 January 2022 |
| | | | | AU | 2021-201901 | B2 | 28 July 2022 |
| | | | | CN | 111642733 | A | 11 September 2020 |
| | | | | CN | 111653548 | A | 11 September 2020 |
| | | | | CN | 111653790 | A | 11 September 2020 |
| | | | | CN | 111653790 | B | 03 December 2021 |
| | | | | CN | 113817022 | A | 21 December 2021 |
| | | | | CN | 113821128 | A | 21 December 2021 |
| | | | | CN | 113824485 | B | 02 September 2022 |
| | | | | CN | 113824943 | A | 21 December 2021 |
| | | | | CN | 113825226 | A | 21 December 2021 |
| | | | | EP | 4155872 | A1 | 29 March 2023 |
| | | | | EP | 4161175 | A1 | 05 April 2023 |
| | | | | EP | 4170928 | A1 | 26 April 2023 |
| | | | | JP | 2023-530723 | A | 19 July 2023 |
| | | | | KR | 10-2577063 | B1 | 08 September 2023 |
| | | | | US | 2022-0383784 | A1 | 01 December 2022 |
| | | | | US | 2023-0152469 | A1 | 18 May 2023 |
| | | | | US | 2023-0196721 | A1 | 22 June 2023 |
| | | | | US | 2023-0208507 | A1 | 29 June 2023 |
| | | | | US | 2023-0229462 | A1 | 20 July 2023 |
| | | | | US | 2023-0275212 | A1 | 31 August 2023 |
| | | | | WO | 2021-253595 | A1 | 23 December 2021 |
| | | | | WO | 2021-253688 | A1 | 23 December 2021 |
| | | | | WO | 2021-253732 | A1 | 23 December 2021 |
| | | | | WO | 2021-253837 | A1 | 23 December 2021 |
| | | | | WO | 2021-253841 | A1 | 23 December 2021 |
| | | | | WO | 2021-254040 | A1 | 23 December 2021 |
| | | | | WO | 2021-254176 | A1 | 23 December 2021 |
| | | | | WO | 2021-254229 | A1 | 23 December 2021 |
| | | | | WO | 2021-254318 | A1 | 23 December 2021 |
| | | | | WO | 2021-254431 | A1 | 23 December 2021 |
| | | | | WO | 2021-254442 | A1 | 23 December 2021 |
| US | 2020-0028541 | A1 | 23 January 2020 | US | 10659107 | B2 | 19 May 2020 |
| | | | | US | 10673491 | B2 | 02 June 2020 |
| | | | | US | 10756780 | B2 | 25 August 2020 |
| | | | | US | 10826567 | B2 | 03 November 2020 |
| | | | | US | 2020-0028577 | A1 | 23 January 2020 |
| | | | | US | 2020-0028579 | A1 | 23 January 2020 |
| | | | | US | 2020-0029296 | A1 | 23 January 2020 |
| US | 2022-0321207 | A1 | 06 October 2022 | WO | 2022-217201 | A1 | 13 October 2022 |

Form PCT/ISA/210 (patent family annex) (July 2022)